# EUROPEAN PATENT SPECIFICATION

(11) **EP 4 121 475 B1**
(45) Date of publication and mention of the grant of the patent: **23.04.2025**
(21) Application number: 21701590.8
(22) Date of filing: 11.01.2021
(51) Int. Cl.: C08G 65/00, C08K 3/40, C08K 5/521, C08K 5/5399, C08L 71/00, C08L 71/12, C08L 83/12

(54) **POLY(PHENYLENE ETHER) COMPOSITION, METHOD FOR THE MANUFACTURE THEREOF, AND ARTICLES MADE THEREFROM**
POLY(PHENYLENETHER)-ZUSAMMENSETZUNG, VERFAHREN ZU IHRER HERSTELLUNG UND DARAUS HERGESTELLTE ARTIKEL
COMPOSITION DE POLY(PHÉNYLÈNE ÉTHER), SON PROCÉDÉ DE FABRICATION ET ARTICLES FABRIQUÉS À PARTIR DE LA COMPOSITION

(30) Priority: 20.03.2020 EP 20164551
(43) Date of publication of application: 25.01.2023
(73) Proprietor: SHPP Global Technologies B.V., 4612 PX Bergen op Zoom (NL)
(72) Inventor: SHARMA, Kirti, 4612PX Bergen Op Zoom (NL)
(74) Representative: Balder IP Law, S.L.
(86) International application number: PCT/IB2021/050177
(87) International publication number: WO 2021/186252

(56) References cited:
- WO-A1-2016/181194
- US-A1- 2014 073 725
- US-A1- 2014 128 522
- US-A1- 2015 322 262

## Description

### BACKGROUND

Poly(phenylene ether) is known for its excellent water resistance, dimensional stability, and inherent flame retardancy. Properties such as strength, stiffness, chemical resistance, and heat resistance can be tailored by blending it with various other plastics in order to meet the requirements of a wide variety of consumer and industrial products, for example, plumbing fixtures, electrical boxes, automotive parts, and insulation for wire and cable.

Some applications for poly(phenylene ether)-based compositions require high electrical resistance. Examples include molded articles in the electronics, automotive, and appliance industries. Many applications also require high electrical resistance in combination with other properties such as good flammability (especially for thin-walled applications), stiffness, heat resistance, chemical resistance, low density, and high impact strength. US 2014/128522 A1 discloses a reinforced poly(phenylene ether)-polysiloxane block copolymer composition including specific amounts of a poly(phenylene ether)-polysiloxane block copolymer reaction product, a flame retardant, and a reinforcing filler, and it is useful to fabricate articles including fuser holders for electrophotographic copiers. US 2015/0322262 A1 discloses a composition that comprises poly(phenylene ether)-polysiloxane block copolymer reaction product, a flame retardant, and a reinforcing filler, and that it is useful for fuser holders for electrophotographic copiers, fan blades, battery parts for hybrid and electric vehicles, parts for automotive kinetic energy recovery systems, and electric vehicle junction boxes. While known compositions may address one or more of these criteria, there is currently a lack of a composition that exhibits a combination of all of these properties.

Accordingly, there remains a need for a poly(phenylene ether)-containing composition that exhibits a UL 94 V-0 rating while maintaining high heat resistance. It would be a further advantage to provide a composition that exhibits a desirable electrical resistance.

### SUMMARY

A poly(phenylene ether) composition comprises 3 to 70 weight percent of a poly(phenylene ether)-poly(siloxane) block copolymer reaction product comprising a poly(phenylene ether)-poly(siloxane) block copolymer and a poly(phenylene ether); 0 to 70 weight percent of a second poly(phenylene ether); 5 to 20 weight percent of an organophosphate ester; 3 to 15 weight percent of a reinforcing filler comprising glass fibers; an impact modifier selected from 15 to 30 weight percent of a high impact polystyrene; 3 to 10 weight percent of a hydrogenated block copolymer of an alkenyl aromatic and a conjugated diene; or a combination thereof; and optionally, 1 to 5 weight percent of titanium dioxide; or 1 to 5 weight percent of hydroxyl apatite; or a combination thereof; provided that when the poly(phenylene ether)-poly(siloxane) block copolymer reaction product is present in an amount of 30 weight percent or more, the impact modifier is 15 to 30 weight percent of high impact polystyrene; and provided that when the impact modifier comprises the hydrogenated block copolymer, the poly(phenylene ether) composition comprises the titanium dioxide, the hydroxyl apatite, or the combination thereof; wherein weight percent of each component is based on the total weight of the poly(phenylene ether) composition.

A method of making the poly(phenylene ether) composition comprises melt-mixing the components of the composition.

An article comprises the poly(phenylene ether) composition.

The above described and other features are exemplified by the following detailed description.

### DETAILED DESCRIPTION

The present inventor has unexpectedly discovered a poly(phenylene ether) composition that includes specific amounts of a poly(phenylene ether)-poly(siloxane) block copolymer reaction product including a poly(phenylene ether)-poly(siloxane) block copolymer and a poly(phenylene ether), an organophosphate ester, a reinforcing filler including glass fibers, an impact modifier that is a high impact polystyrene, a hydrogenated block copolymer of an alkenyl aromatic and a conjugated diene, or a combination thereof, optionally, a second poly(phenylene ether), and optionally, 1 to 5 weight percent of titanium dioxide; or 1 to 5 weight percent of hydroxyl apatite; or a combination thereof can provide an advantageous combination of properties. For example, the composition can exhibit a desirable balance of flame retardancy (i.e., achieves a UL-94 flammability rating of V0 at a thickness of 1.5, 1.0, or V1 at a thickness of 0.75 mm), heat resistance, chemical resistance (e.g., to lithium ion battery electrolytes such as LiPF₆), a comparative tracking index rating of PLC 2, lower density, and improved impact strength. The composition can be particularly useful for forming various articles. Exemplary articles can include, but are not limited to, an electric vehicle battery module, battery housing, battery case, battery cell frame, battery cell spacers, battery cell retainers, bus bar holders, terminal covers, an electrical or electronic component, a thermoset circuit breaker, a fuser holder for an electrographic copier, a photovoltaic junction box, photovoltaic connector, an electrical connector, an automotive electrical connector, an electrical relay, a charge coupler, an appliance component, an automotive component, a portable device, a mobile component, or a stationary electrical component. The composition of the present disclosure is superior to compositions based on poly(phenylene ether) homopolymers, as well as alternative materials used in applications requiring a UL 94 V0 flammability rating, for example alternative glass-filled poly(ethylene terephthalate) compositions and glass-filled poly(butylene terephthalate) compositions, which often use halogenated flame retardants. The present composition does not require a halogenated flame retardant to achieve the desired V0 rating.

Accordingly, an aspect of the present disclosure is a poly(phenylene ether) composition. The composition includes a poly(phenylene ether)-poly(siloxane) block copolymer reaction product comprising a poly(phenylene ether)-poly(siloxane) block copolymer and a poly(phenylene ether) (without an incorporated polysiloxane block). For brevity, the poly(phenylene ether)-poly(siloxane) block copolymer reaction product is sometimes referred to herein as the "reaction product". The poly(phenylene ether)-poly(siloxane) block copolymer reaction product is synthesized by oxidative polymerization of a mixture of monohydric phenol and hydroxyaryl-terminated polysiloxane. This oxidative polymerization produces poly(phenylene ether)-polysiloxane block copolymer as the desired product and poly(phenylene ether) as a byproduct. This poly(phenylene ether) present in the reaction product is sometimes referred to herein as the "first poly(phenylene ether) to distinguish it from a "second poly(phenylene ether) that is optionally present in the composition and not derived from the poly(phenylene ether)-polysiloxane block copolymer reaction product. It is difficult and unnecessary to separate the first poly(phenylene ether) from the poly(phenylene ether)-polysiloxane block copolymer. The poly(phenylene ether)-polysiloxane block copolymer can therefore be incorporated into the present composition as a "poly(phenylene ether)-polysiloxane block copolymer reaction product" that comprises both the first poly(phenylene ether) and the poly(phenylene ether)-polysiloxane block copolymer.

The poly(phenylene ether)-polysiloxane block copolymer comprises a poly(phenylene ether) block and a polysiloxane block. **In** an aspect, the poly(phenylene ether) block comprises phenylene ether repeating units having the structure 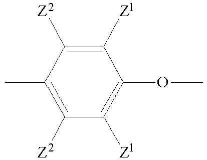 wherein for each repeating unit, each Z¹ is independently halogen, unsubstituted or substituted C₁₋₁₂ hydrocarbyl provided that the hydrocarbyl group is not tertiary hydrocarbyl, C₁₋₁₂ hydrocarbylthio, C₁₋₁₂ hydrocarbyloxy, or C₂₋₁₂ halohydrocarbyloxy wherein at least two carbon atoms separate the halogen and oxygen atoms; and each Z² is independently hydrogen, halogen, unsubstituted or substituted C₁₋₁₂ hydrocarbyl provided that the hydrocarbyl group is not tertiary hydrocarbyl, C₁₋₁₂ hydrocarbylthio, C₁₋₁₂ hydrocarbyloxy, or C₂₋₁₂ halohydrocarbyloxy wherein at least two carbon atoms separate the halogen and oxygen atom. In an aspect, the poly(phenylene ether) block comprises 2,6-dimethyl-1,4-phenylene ether repeating units, that is, repeating units having the structure 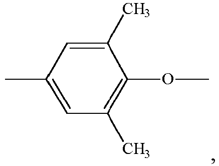 2,3,6-trimethyl-1,4-phenylene ether repeating units, or a combination thereof.

In an aspect, the polysiloxane block comprises repeating units having the structure 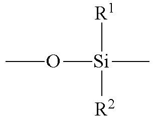 wherein each occurrence of R¹ and R² is independently hydrogen, C₁₋₁₂ hydrocarbyl or C₁₋₁₂ halohydrocarbyl; and the polysiloxane block further comprises a terminal unit having the structure 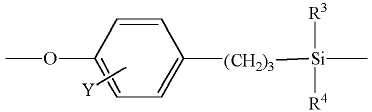 wherein Y is hydrogen, C₁₋₁₂ hydrocarbyl, C₁₋₁₂ hydrocarbyloxy, or halogen, and wherein each occurrence of R³ and R⁴ is independently hydrogen, C₁₋₁₂ hydrocarbyl or C₁₋₁₂ halohydrocarbyl. In an aspect, the polysiloxane repeating units comprise dimethylsiloxane (-Si(CH₃)₂O-) units. In an aspect, the polysiloxane block has the structure 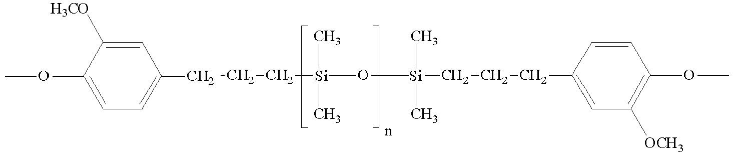 wherein n is, on average, 20 to 60.

The hydroxyaryl-terminated polysiloxane comprises at least one hydroxyaryl terminal group. In an aspect, the hydroxyaryl-terminated polysiloxane has a single hydroxyaryl terminal group, in which case a poly(phenylene ether)-polysiloxane diblock copolymer is formed. In an aspect, the hydroxyaryl-terminated polysiloxane has two hydroxyaryl terminal groups, in which case in which case poly(phenylene ether)-polysiloxane diblock copolymer and/or poly(phenylene ether)-polysiloxane-poly(phenylene ether) triblock copolymer are formed. It is also possible for the hydroxyaryl-terminated polysiloxane to have a branched structure that allows three or more hydroxyaryl terminal groups and the formation of corresponding branched block copolymers.

In an aspect, the hydroxyaryl-terminated polysiloxane comprises, on average, 20 to 80 siloxane repeating units, specifically 25 to 70 siloxane repeating units, more specifically 30 to 60 siloxane repeating units, still more specifically 35 to 50 siloxane repeating units, yet more specifically 40 to 50 siloxane repeating units. The number of siloxane repeating units in the polysiloxane block is essentially unaffected by the copolymerization and isolation conditions, and it is therefore equivalent to the number of siloxane repeating units in the hydroxyaryl-terminated polysiloxane starting material. When not otherwise known, the average number of siloxane repeating units per hydroxylaryl-terminated polysiloxane molecule can be determined by nuclear magnetic resonance (NMR) methods that compare the intensities of signals associated with the siloxane repeating units to those associated with the hydroxyaryl terminal groups. For example, when the hydroxyaryl-terminated polysiloxane is a eugenol-capped polydimethylsiloxane, it is possible to determine the average number of siloxane repeating units by a proton nuclear magnetic resonance (¹H NMR) method in which integrals for the protons of the dimethylsiloxane resonance and the protons of the eugenol methoxy group are compared.

In an aspect, the poly(phenylene ether)-polysiloxane block copolymer reaction product has a weight average molecular weight of at least 30,000 grams per mole (g/mol). For example, the reaction product can have a weight average molecular weight of 30,000 to 150,000 g/mol, or 35,000 to 120,000 g/mol, preferably 40,000 to 90,000 g/mol, even more preferably 45,000 to 70,000 g/mol. In an aspect, the poly(phenylene ether)-polysiloxane block copolymer reaction product has a number average molecular weight of 10,000 to 50,000 g/mol, preferably 10,000 to 30,000 g/mol, more preferably 14,000 to 24,000 g/mol.

In an aspect, the poly(phenylene ether)-polysiloxane block copolymer reaction product has an intrinsic viscosity of at least 0.3 deciliter per gram, as measured by Ubbelohde viscometer at 25°C in chloroform. In an aspect, the intrinsic viscosity is 0.3 to 0.5 deciliter per gram, specifically 0.31 to 0.5 deciliter per gram, more specifically 0.35 to 0.47 deciliter per gram.

One indication of the efficiency with which the hydroxyaryl-terminated polysiloxane is incorporated into block copolymer is the low concentration of so-called poly(phenylene ether) "tail" groups in the reaction product. In a homopolymerization of 2,6-dimethylphenol, a large fraction of product molecules have a so-called head-to-tail structure in which the linear product molecule is terminated on one end by a 3,5-dimethyl-4-hydroxyphenyl "head" and on the other end by a 2,6-dimethylphenoxy "tail". Thus, when the monohydric phenol consists of 2,6-dimethylphenol, the poly(phenylene ether) tail group has the structure 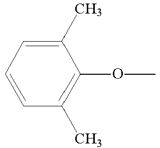 wherein the 3-, 4-, and 5-positions of the ring are substituted with hydrogen atoms (that is, the term "2,6-dimethylphenoxy" refers to a monovalent group and does not encompass divalent 2,6-dimethyl-1,4-phenylene ether groups). In a copolymerization of monohydric phenol with hydroxyaryl-terminated polysiloxane, incorporation of the hydroxyaryl-terminated polysiloxane into block copolymer will reduce the concentration of phenylene ether "tail" groups. Thus, in an aspect, the monohydric phenol consists of 2,6-dimethylphenol, and the reaction product of comprises less than or equal to 0.4 weight percent, specifically 0.1 to 0.4 weight percent, of 2,6-dimethylphenoxy groups, based on the weight of the reaction product. The 2,6-dimethylphenoxy tail end groups are characteristic of poly(2,6-dimethyl-1,4-phenylene ether) homopolymer with a head-to-tail (hydroxy-monoterminated) structure in which the linear product molecule is terminated on one end by a 3,5-dimethyl-4-hydroxyphenyl "head" and on the other end by a 2,6-dimethylphenoxy "tail". So, the low concentration of 2,6-dimethylphenoxy tail end groups is an indication that the reaction product comprises a reduced concentration of such monofunctional homopolymer and an increased concentration of the desired poly(phenylene ether)-polysiloxane block copolymer.

The poly(phenylene ether)-polysiloxane block copolymer reaction product can further include groups derived from a diphenoquinone, which is itself an oxidation product of the monohydric phenol. For example, when the monohydric phenol is 2,6-dimethylphenol, the diphenoquinone is 3,3',5,5'-tetramethyl-4,4'-diphenoquinone. During the build phase of the copolymerization, the diphenoquinone is typically incorporated into the "tail" end of a head-to-tail poly(phenylene ether) as the corresponding biphenyl group. Through further reactions, the terminal biphenyl group can become an internal biphenyl group in the poly(phenylene ether) chain. In an aspect, the monohydric phenol consists of 2,6-dimethylphenol, and the reaction product comprises 0.1 to 2.0 weight percent, and specifically 1.1 to 2.0 weight percent, of 2,6-dimethyl-4-(3,5-dimethyl-4-hydroxyphenyl)-phenoxy ("biphenyl") groups. The biphenyl groups are present only in bifunctional (head-to-head or hydroxyl-diterminated) structure. So, the low concentration of biphenyl group is an indication that the reaction product comprises a reduced concentration of such bifunctional homopolymer and an increased concentration of the desired poly(phenylene ether)-polysiloxane block copolymer.

The oxidative copolymerization can be conducted with a reaction time greater than or equal to 110 minutes. The reaction time is the elapsed time between initiation and termination of oxygen flow. (Although, for brevity, the description herein repeatedly refers to "oxygen" or "oxygen flow", it will be understood that any oxygen-containing gas, including air, can be used as the oxygen source.) In an aspect, the reaction time is 110 to 300 minutes, specifically 140 to 250 minutes, more specifically 170 to 220 minutes.

The oxidative copolymerization can include a "build time", which is the time between completion of monomer addition and termination of oxygen flow. In an aspect, the reaction time comprises a build time of 80 to 160 minutes. In an aspect, the reaction temperature during at least part of the build time can be 40 to 60°C, specifically 45 to 55°C.

The poly(phenylene ether)-polysiloxane block copolymer reaction product can be isolated from solution by an isolation procedure that minimizes volatile and nonvolatile contaminants. For example, in an aspect, the reaction product comprises less than or equal to 1 weight percent of total volatiles, specifically 0.2 to 1 weight percent of total volatiles. In an aspect, the monomer mixture is oxidatively copolymerized in the presence of a catalyst comprising a metal (such as copper or manganese), and the poly(phenylene ether)-polysiloxane block copolymer reaction product comprises less than or equal to 100 parts per million by weight of the metal, specifically 5 to 100 parts per million by weight of the metal, more specifically 10 to 50 parts per million by weight of the metal, even more specifically 20 to 50 parts per million by weight of the metal, based on the weight of the poly(phenylene ether)-polysiloxane block copolymer reaction product.

Certain isolation procedures make it possible to assure that the poly(phenylene ether)-polysiloxane block copolymer reaction product is essentially free of residual hydroxyaryl-terminated polysiloxane starting material. In other words, these isolation procedures assure that the polysiloxane content of the reaction product consists essentially of the polysiloxane blocks of poly(phenylene ether)-polysiloxane block copolymer. After termination of the copolymerization reaction, the poly(phenylene ether)-polysiloxane block copolymer reaction product can be isolated from solution using methods known in the art for isolating poly(phenylene ether)s from solution. For example, the poly(phenylene ether)-polysiloxane block copolymer reaction product can be isolated by precipitation with an antisolvent comprising at least 50 weight percent of one or more C₁₋₆ alkanols, such as methanol, ethanol, n-propanol, or isopropanol. The use of an isopropanol-containing antisolvent is advantageous because isopropanol is a good solvent for unreacted hydroxyaryl-terminated polysiloxane. Therefore, precipitation and/or washing with an isopropanol-containing antisolvent (e.g., isopropanol alone) substantially remove hydroxyaryl-terminated polysiloxane from the isolated product. Using these methods, it is possible to produce a poly(phenylene ether)-polysiloxane block copolymer reaction product comprising less than or equal to 1.5 weight percent of the hydroxyaryl-terminated polysiloxane, specifically less than or equal to 1 weight percent of the hydroxyaryl-terminated polysiloxane, more specifically less than or equal to 0.5 weight percent of the hydroxyaryl-terminated polysiloxane, still more specifically less than or equal to 0.1 weight percent of the hydroxyaryl-terminated polysiloxane, based on the total weight of the poly(phenylene ether)-polysiloxane block copolymer reaction product. In an aspect, the composition comprises less than or equal to 20 parts by weight of hydroxyaryl-terminated polysiloxane not covalently bound in the poly(phenylene ether)-polysiloxane block copolymer for each 100 parts by weight of hydroxyaryl-terminated polysiloxane covalently bound in the poly(phenylene ether)-polysiloxane block copolymer. Within this limit, the amount of hydroxyaryl-terminated polysiloxane not covalently bound in the poly(phenylene ether)-polysiloxane block copolymer can be less than or equal to 10 parts by weight, specifically less than or equal to 5 parts by weight, more specifically less than or equal to 2 parts by weight, even more specifically less than or equal to 1 part by weight.

In an aspect, the poly(phenylene ether)-polysiloxane block copolymer reaction product incorporates greater than 75 weight percent, of the hydroxyaryl-terminated polysiloxane starting material into the poly(phenylene ether)-polysiloxane block copolymer. Specifically, the amount of the hydroxyaryl-terminated polysiloxane incorporated into the poly(phenylene ether)-polysiloxane block copolymer can be at least 80 weight percent, more specifically at least 85 weight percent, still more specifically at least 90 weight percent, yet more specifically at least 95 weight percent.

Additional details relating to the preparation, characterization, and properties of the poly(phenylene ether)-polysiloxane block copolymer reaction product can be found in U.S. Patent No. 8,017,697 to Carrillo et al., and U.S. Patent Application Publication No. US 2012/0329961 A1 of Carrillo et al.

The poly(phenylene ether)-polysiloxane block copolymer reaction product comprises 1 to 30 weight percent siloxane repeating units and 70 to 99 weight percent phenylene ether repeating units, based on the total weight of the reaction product. It will be understood that the siloxane repeating units are derived from the hydroxyaryl-terminated polysiloxane, and the phenylene ether repeating units are derived from the monohydric phenol. In an aspect, such as, for example, when the poly(phenylene ether)-polysiloxane block copolymer reaction product is purified via precipitation in isopropanol, the siloxane repeating units consist essentially of the residue of hydroxyaryl-terminated polysiloxane that has been incorporated into the poly(phenylene ether)-polysiloxane block copolymer.

In an aspect, the reaction product comprises 1 to 8 weight percent siloxane repeating units and 12 to 99 weight percent phenylene ether repeating units, based on the total weight of the reaction product. Within these ranges, the amount of siloxane repeating units can be 2 to 7 weight percent, specifically 3 to 6 weight percent, more specifically 4 to 5 weight percent; and the amount of phenylene ether repeating units can be 93 to 98 weight percent, specifically 94 to 97 weight percent, more specifically 95 to 96 weight percent.

The reaction product can include relatively small amounts of very low molecular weight species. Thus, in an aspect, the reaction product comprises less than 25 weight percent of molecules having a molecular weight less than 10,000 g/mol, specifically 5 to 25 weight percent of molecules having a molecular weight less than 10,000 g/mol, more specifically 7 to 21 weight percent of molecules having a molecular weight less than 10,000 g/mol. In an aspect, the molecules having a molecular weight less than 10,000 g/mol comprise, on average, 5 to 10 weight percent siloxane repeating units, specifically 6 to 9 weight percent siloxane repeating units.

Similarly, the reaction product can also include relatively small amounts of very high molecular weight species. Thus, in an aspect, the reaction product comprises less than 25 weight percent of molecules having a molecular weight greater than 100,000 g/mol, specifically 5 to 25 weight percent of molecules having a molecular weight greater than 100,000 g/mol, more specifically 7 to 23 weight percent of molecules having a molecular weight greater than 100,000 g/mol. In an aspect, the molecules having a molecular weight greater than 100,000 g/mol comprise, on average, 3 to 6 weight percent siloxane repeating units, specifically 4 to 5 weight percent siloxane repeating units.

In a very specific procedure for preparing the poly(phenylene ether)-polysiloxane block copolymer reaction product, the monohydric phenol is 2,6-dimethylphenol; the hydroxyaryl-terminated polysiloxane is a eugenol-capped polydimethylsiloxane comprising 35 to 60 dimethylsiloxane units; the oxidative copolymerization is conducted with a reaction time of 170 to 220 minutes; and the hydroxyaryl-terminated polysiloxane constitutes 2 to 7 weight percent of the combined weight of the monohydric phenol and the hydroxyaryl-terminated polysiloxane.

The composition comprises 3 to 70 weight percent of the poly(phenylene ether)-polysiloxane block copolymer reaction product, based on the total weight of the composition. With this range, the reaction product amount can be less than 30 weight percent, specifically less than or equal to 28 weight percent, or less than or equal to 25 weight percent. In an aspect, the reaction product amount can be 3 to 28 weight percent, or 3 to 25 weight percent, or 5 to 25 weight percent, or 5 to 28 weight percent, or 3 to 20 weight percent, or 5 to 20 weight percent.

In an aspect, the composition can optionally further comprise a second poly(phenylene ether). For example, it can be beneficial to add a second poly(phenylene ether) to the composition when the copolymer reaction product is used in an amount of less than 50 weight percent, or less than 30 weight percent, or less than 20 weight percent. As used herein, the term "second poly(phenylene ether) refers to a poly(phenylene ether) that is not derived from the poly(phenylene ether)-polysiloxane block copolymer reaction. The second poly(phenylene ether) can be chemically the same as or different from the first poly(phenylene ether). Suitable first and second poly(phenylene ether)s include those comprising repeating structural units having the formula 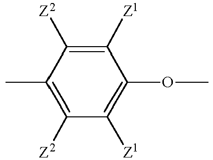 wherein for each repeating unit, each Z¹ is independently halogen, unsubstituted or substituted C₁₋₁₂ hydrocarbyl provided that the hydrocarbyl group is not tertiary hydrocarbyl, C₁₋₁₂ hydrocarbylthio, C₁₋₁₂ hydrocarbyloxy, or C₂₋₁₂ halohydrocarbyloxy wherein at least two carbon atoms separate the halogen and oxygen atoms; and each Z² is independently hydrogen, halogen, unsubstituted or substituted C₁₋₁₂ hydrocarbyl provided that the hydrocarbyl group is not tertiary hydrocarbyl, C₁-₁₂ hydrocarbylthio, C₁-₁₂ hydrocarbyloxy, or C₂-₁₂ halohydrocarbyloxy wherein at least two carbon atoms separate the halogen and oxygen atom. In an aspect, the second poly(phenylene ether) comprises 2,6-dimethyl-1,4-phenylene ether repeating units, that is, repeating units having the structure 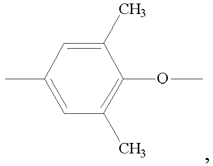 2,3,6-trimethyl-1,4-phenylene ether repeating units, or a combination thereof.

In an aspect, the second poly(phenylene ether) can have an intrinsic viscosity of 0.3 to 0.6 deciliters per gram, preferably 0.35 to 0.50 deciliters per grams, measured at 25°C in chloroform using an Ubbelohde viscometer. In a specific aspect, the second poly(phenylene ether) is a poly(2,6-dimethyl-1,4-phenylene ether) having an intrinsic viscosity if 0.3 to 0.6 deciliters per gram, preferably 0.35 to 0.50 deciliters per grams, measured at 25°C in chloroform using an Ubbelohde viscometer.

When present, the second poly(phenylene ether) can be used in an amount of up to 70 weight percent, based on the total weight of the composition. Within this range, the second poly(phenylene ether) can be used in an amount of up to 30 weight percent. Also within this range the second poly(phenylene ether) can be used in an amount of 38 to 68 weight percent, or 40 to 65 weight percent.

In addition to the poly(phenylene ether)-poly(siloxane) block copolymer reaction product and the optional second poly(phenylene ether), the composition can further include an organophosphate ester flame retardant. In an aspect, the flame retardant can consist of the organophosphate ester, and no other flame retardant is present. Exemplary organophosphate ester flame retardants include phosphate esters comprising phenyl groups, substituted phenyl groups, or a combination of phenyl groups and substituted phenyl groups, bis-aryl phosphate esters based upon resorcinol such as, for example, resorcinol bis(diphenyl phosphate), as well as those based upon bisphenols such as, for example, bisphenol A bis(diphenyl phosphate). In an aspect, the organophosphate ester is selected from tris(alkylphenyl) phosphates (for example, CAS Reg. No. 89492-23-9 or CAS Reg. No. 78-33-1), resorcinol bis(diphenyl phosphate) (CAS Reg. No. 57583-54-7), bisphenol A bis(diphenyl phosphate) (CAS Reg. No. 181028-79-5), triphenyl phosphate (CAS Reg. No. 115-86-6), tris(isopropylphenyl) phosphates (for example, CAS Reg. No. 68937-41-7), t-butylphenyl diphenyl phosphates (CAS Reg. No. 56803-37-3), bis(t-butylphenyl) phenyl phosphates (CAS Reg. No. 65652-41-7), tris(t-butylphenyl) phosphates (CAS Reg. No. 78-33-1), and combinations thereof.

In an aspect, the organophosphate ester comprises a bis-aryl phosphate having the formula 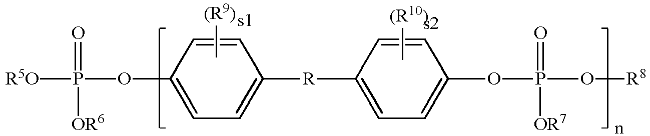 wherein R is independently at each occurrence a C₁-₁₂ alkylene group; R⁹ and R¹⁰ are independently at each occurrence a C₁-₅ alkyl group; R⁵, R⁶, and R⁸ are independently a C₁-₁₂ hydrocarbyl group; R⁷ is independently at each occurrence a C₁-₁₂ hydrocarbyl group; n is 1 to 25; and s1 and s2 are independently an integer equal to 0, 1, or 2. In an aspect OR⁵, OR⁶, OR⁷ and OR⁸ are independently derived from phenol, a monoalkylphenol, a dialkylphenol, or a trialkylphenol. As readily appreciated by one of ordinary skill in the art, the bis-aryl phosphate is derived from a bisphenol. Exemplary bisphenols include 2,2-bis(4-hydroxyphenyl)propane (bisphenol A), 2,2-bis(4-hydroxy-3-methylphenyl)propane, bis(4-hydroxyphenyl)methane, bis(4-hydroxy-3,5-dimethylphenyl)methane and 1,1-bis(4-hydroxyphenyl)ethane. In an aspect, the bisphenol comprises bisphenol A or resorcinol.

In an aspect, the composition can optionally exclude flame retardants other than an organophosphate ester. For example, in an aspect, the composition can exclude a flame retardant comprising a metal dialkylphosphinate, a phosphazene, a halogenated flame retardant, a nitrogen-containing flame retardant (e.g., melamine pyrophosphate, melamine polyphosphate, and the like, or a mixture thereof), and the like or a combination thereof.

The composition includes the organophosphate ester in an amount of 5 to 20 weight percent, based on the total weight of the composition. Within this range, the organophosphate ester can be present in an amount of at least 7 weight percent, or at least 10 weight percent, or at least 12 weight percent, or at least 15 weight percent, or at most 18 weight percent, or at most 15 weight percent, or at most 12 weight percent, or at most 10 weight percent, or at most 7 weight percent. For example, the organophosphate ester can be present in an amount of 10 to 15 weight percent.

In addition to the poly(phenylene ether)-polysiloxane reaction product, the optional second poly(phenylene ether) and the organophosphate ester, the composition further includes a reinforcing filler comprising glass fibers. In an aspect, the reinforcing filler can consist of glass fibers (i.e., no other reinforcing filler is present in the composition). Suitable glass fibers include those based on E, A, C, ECR, R, S, D, and NE glasses, as well as quartz. In an aspect, the glass fiber has a diameter of 2 to 30 micrometers, specifically 5 to 25 micrometers, more specifically 10 to 15 micrometers. In an aspect, the length of the glass fibers before compounding is 2 to 7 millimeters, specifically 3 to 5 millimeters. The glass fiber can, optionally, include a so-called adhesion promoter to improve its compatibility with the poly(phenylene ether). Adhesion promoters include chromium complexes, silanes, titanates, zirco-aluminates, propylene maleic anhydride copolymers, reactive cellulose esters and the like. Suitable glass fiber is commercially available from suppliers including, for example, Owens Corning, Nippon Electric Glass, PPG, and Johns Manville.

The reinforcing filler can be present in an amount of 3 to 15 weight percent based on the total weight of the composition. For example, the reinforcing filler can be present in an amount of 5 to 15 weight percent, or 5 to 10 weight percent, or 10 to 15 weight percent.

In addition to the poly(phenylene ether)-polysiloxane reaction product, the optional second poly(phenylene ether), the organophosphate ester, and the reinforcing filler, the composition further includes an impact modifier. Impact modifiers include high impact polystyrene, a hydrogenated block copolymer of an alkenyl aromatic and a conjugated diene, or a combination thereof.

In an aspect, the impact modifier can include a high impact polystyrene (HIPS), also referred to as a rubber-modified polystyrene. Rubber-modified polystyrene comprises polystyrene and polybutadiene. In an aspect, the rubber-modified polystyrene comprises 80 to 96 weight percent polystyrene, specifically 88 to 94 weight percent polystyrene; and 4 to 20 weight percent polybutadiene, specifically 6 to 12 weight percent polybutadiene, based on the weight of the rubber-modified polystyrene. Suitable rubber-modified polystyrenes are commercially available as, for example, HIPS3190 from SABIC.

When the impact modifier comprises a high impact polystyrene, the high impact polystyrene can be present in an amount of 15 to 30 weight percent, based on the total weight of the composition. When the composition comprises the poly(phenylene ether)-poly(siloxane) block copolymer reaction product in an amount of 30 weight percent or more, then the impact modifier is required to be high impact polystyrene in an amount of at least 15 weight percent, preferably 15 to 30 weight percent.

In an aspect, the impact modifier can include a hydrogenated block copolymer of an alkenyl aromatic and a conjugated diene. For brevity, this component is referred to as the "hydrogenated block copolymer". The hydrogenated block copolymer can comprise 10 to 90 weight percent of poly(alkenyl aromatic) content and 90 to 10 weight percent of hydrogenated poly(conjugated diene) content, based on the weight of the hydrogenated block copolymer. In an aspect, the hydrogenated block copolymer is a low poly(alkenyl aromatic content) hydrogenated block copolymer in which the poly(alkenyl aromatic) content is 10 to less than 40 weight percent, specifically 20 to 35 0.weight percent, more specifically 25 to 35 weight percent, yet more specifically 30 to 35 weight percent, all based on the weight of the low poly(alkenyl aromatic) content hydrogenated block copolymer. In an aspect, the hydrogenated block copolymer is a high poly(alkenyl aromatic content) hydrogenated block copolymer in which the poly(alkenyl aromatic) content is 40 to 90 weight percent, specifically 50 to 80 weight percent, more specifically 60 to 70 weight percent, all based on the weight of the high poly(alkenyl aromatic content) hydrogenated block copolymer.

In an aspect, the hydrogenated block copolymer has a weight average molecular weight of 40,000 to 400,000 grams per mole (g/mol). The number average molecular weight and the weight average molecular weight can be determined by gel permeation chromatography and based on comparison to polystyrene standards. In an aspect, the hydrogenated block copolymer has a weight average molecular weight of 200,000 to 400,000 g/mol, specifically 220,000 to 350,000 g/mol. In an aspect, the hydrogenated block copolymer has a weight average molecular weight of 40,000 to 200,000 g/mol, specifically 40,000 to 180,000 g/mol, more specifically 40,000 to 150,000 g/mol.

The alkenyl aromatic monomer used to prepare the hydrogenated block copolymer can have the structure 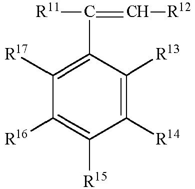 wherein R¹¹ and R¹² each independently represent a hydrogen atom, a C₁₋₈ alkyl group, or a C₂₋₈ alkenyl group; R¹³ and R¹⁷ each independently represent a hydrogen atom, a C₁₋₈ alkyl group, a chlorine atom, or a bromine atom; and R¹⁴, R¹⁵, and R¹⁶ each independently represent a hydrogen atom, a C₁₋₈ alkyl group, or a C₂₋₈ alkenyl group, or R¹⁴ and R¹⁵ are taken together with the central aromatic ring to form a naphthyl group, or R¹⁵ and R¹⁶ are taken together with the central aromatic ring to form a naphthyl group. Specific alkenyl aromatic monomers include, for example, styrene, chlorostyrenes such as p-chlorostyrene, methylstyrenes such as alpha methylstyrene and p methylstyrene, and t-butylstyrenes such as 3-t-butylstyrene and 4 t-butylstyrene. In an aspect, the alkenyl aromatic monomer is styrene.

The conjugated diene used to prepare the hydrogenated block copolymer can be a C₄₋₂₀ conjugated diene. Suitable conjugated dienes include, for example, 1,3-butadiene, 2-methyl-1,3-butadiene, 2-chloro-1,3-butadiene, 2,3-dimethyl 1,3 butadiene, 1,3-pentadiene, 1,3-hexadiene, and the like, and combinations thereof. In an aspect, the conjugated diene is 1,3-butadiene, 2 methyl-1,3-butadiene, or a combination thereof. In an aspect, the conjugated diene is 1,3-butadiene.

The hydrogenated block copolymer is a copolymer comprising (A) at least one block derived from an alkenyl aromatic compound and (B) at least one block derived from a conjugated diene, in which the aliphatic unsaturated group content in the block (B) is at least partially reduced by hydrogenation. In an aspect, the aliphatic unsaturation in the (B) block is reduced by at least 50 percent, specifically at least 70 percent. The arrangement of blocks (A) and (B) includes a linear structure, a grafted structure, and a radial teleblock structure with or without a branched chain. Linear block copolymers include tapered linear structures and non-tapered linear structures. In an aspect, the hydrogenated block copolymer has a tapered linear structure. In an aspect, the hydrogenated block copolymer has a non-tapered linear structure. In an aspect, the hydrogenated block copolymer comprises a (B) block that comprises random incorporation of alkenyl aromatic monomer. Linear block copolymer structures include diblock (A-B block), triblock (A-B-A block or B-A-B block), tetrablock (A B-A-B block), and pentablock (A-B-A-B-A block or B A-B-A-B block) structures as well as linear structures containing 6 or more blocks in total of (A) and (B), wherein the molecular weight of each (A) block can be the same as or different from that of other (A) blocks, and the molecular weight of each (B) block can be the same as or different from that of other (B) blocks. In an aspect, the hydrogenated block copolymer is a diblock copolymer, a triblock copolymer, or a combination thereof.

In an aspect, the hydrogenated block copolymer excludes the residue of monomers other than the alkenyl aromatic compound and the conjugated diene. In an aspect, the hydrogenated block copolymer consists of blocks derived from the alkenyl aromatic compound and the conjugated diene. It does not comprise grafts formed from these or any other monomers. It also consists of carbon and hydrogen atoms and therefore excludes heteroatoms. In an aspect, the hydrogenated block copolymer includes the residue of one or more acid functionalizing agents, such as maleic anhydride. In an aspect, the hydrogenated block copolymer comprises a polystyrene poly(ethylenebutylene)-polystyrene triblock copolymer.

Methods for preparing hydrogenated block copolymers are known in the art and many hydrogenated block copolymers are commercially available. Illustrative commercially available hydrogenated block copolymers include the polystyrene-poly(ethylene-propylene) diblock copolymers available from Kraton Performance Polymers Inc. as KRATON^{™} G1701 (having 37 weight percent polystyrene) and G1702 (having 28 weight percent polystyrene); the polystyrene-poly(ethylene-butylene)-polystyrene triblock copolymers available from Kraton Performance Polymers Inc.as KRATON^{™} G1641 (having 33 weight percent polystyrene), G1650 (having 30 weight percent polystyrene), G1651 (having 33 weight percent polystyrene), and G1654 (having 31 weight percent polystyrene); and the polystyrene-poly(ethylene-ethylene/propylene)-polystyrene triblock copolymers available from Kuraray as SEPTON^{™} S4044, S4055, S4077, and S4099. Additional commercially available hydrogenated block copolymers include polystyrene-poly(ethylene-butylene)-polystyrene (SEBS) triblock copolymers available from Dynasol as CALPRENE^{™} H6140 (having 31 weight percent polystyrene), H6170 (having 33 weight percent polystyrene), H6171 (having 33 weight percent polystyrene), and H6174 (having 33 weight percent polystyrene); and from Kuraray as SEPTON^{™} 8006 (having 33 weight percent polystyrene) and 8007 (having 30 weight percent polystyrene); polystyrene-poly(ethylene-butylene-styrene)-polystyrene tapered block copolymers available from Kraton Performance Polymers as KRATON^{™} A1535 (having 56.3-60.3 weight percent polystyrene) and A1536 (having 37-44 weight percent polystyrene); polystyrene-poly(ethylene-propylene)-polystyrene (SEPS) copolymers available from Kuraray as SEPTON^{™} 2006 (having 35 weight percent polystyrene) and 2007 (having 30 weight percent polystyrene); and oil-extended compounds of these hydrogenated block copolymers available from Kraton Performance Polymers Inc.as KRATON^{™} G4609 (containing 45% mineral oil, and the SEBS having 33 weight percent polystyrene) and G4610 (containing 31% mineral oil, and the SEBS having 33 weight percent polystyrene); and from Asahi as TUFTEC^{™} H1272 (containing 36% oil, and the SEBS having 35 weight percent polystyrene). Mixtures of two of more hydrogenated block copolymers can be used. In an aspect, the hydrogenated block copolymer comprises a polystyrene poly(ethylene-butylene)-polystyrene triblock copolymer having a weight average molecular weight of at least 100,000 grams per mole.

The composition comprises the hydrogenated block copolymer in an amount of 3 to 10 weight percent, based on the total weight of the composition. Within this range, the hydrogenated block copolymer can be present in an amount of 3 to 8 weight percent, or 3 to 6 weight percent, or 3 to 5 weight percent.

The composition can optionally further comprise titanium dioxide, hydroxyl apatite, or a combination thereof. When the composition comprises an impact modifier that is the hydrogenated block copolymer, the composition includes the titanium dioxide, the hydroxyl apatite, or the combination thereof.

In an aspect, the composition comprises hydroxyapatite (CAS No. 1306-06-5). Hydroxyapatite has the chemical formula Ca₅(OH)(PO₄)₃. Hydroxyapatite is also known as hydroxyl apatite, tricalcium phosphate, tribasic calcium phosphate, pentacalcium-hydroxyorthophosphate, and apatite. In an aspect the hydroxyl apatite has an average particle size of 1 to 10 micrometers. Within this range the average particle size can be greater than or equal to 2 micrometers. Also within this range the average particle size can be less than or equal to 8 micrometers. The composition can comprise hydroxyl apatite in an amount of 1 to 5 weight percent based on the total weight of the composition. Within this range the amount of hydroxyl apatite can be greater than or equal to 1 weight percent. Also within this range the amount of hydroxyl apatite can be less than or equal to 5 weight percent. For example, the hydroxyl apatite can be present in an amount of 1 to 4 weight percent, or 1 to 3 weight percent, or 1.5 to 2.5 weight percent, each based on the total weight of the composition.

When present, the composition can include the titanium dioxide in an amount of 1 to 5 weight percent, based on the total weight of the composition.

The composition can optionally further comprise an additive composition, comprising one or more additives selected to achieve a desired property, with the proviso that the additives are also selected so as to not significantly adversely affect a desired property of the composition. The additive composition or individual additives can be mixed at a suitable time during the mixing of the components for forming the composition. The additive composition can include flow modifier, filler (e.g., a particulate polytetrafluoroethylene (PTFE), glass, carbon, mineral, or metal), antioxidant, heat stabilizer, light stabilizer, ultraviolet (UV) light stabilizer, UV absorbing additive, plasticizer, lubricant, release agent (such as a mold release agent), antistatic agent, anti-fog agent, antimicrobial agent, colorant (e.g., a dye or pigment), surface effect additive, radiation stabilizer, flame retardant, anti-drip agent (e.g., a PTFE-encapsulated styrene-acrylonitrile copolymer (TSAN)), or a combination thereof. The additives are used in the amounts generally known to be effective. For example, the total amount of the additive composition (other than any impact modifier, filler, or reinforcing agent) can be 0.001 to 10.0 weight percent, or 0.01 to 5 weight percent, each based on the total weight of the polymer in the composition.

For example, the composition can optionally further include an anti-drip agent. Anti-drip agents can comprise, for example, a fibril forming or non-fibril forming fluoropolymer such as polytetrafluoroethylene (PTFE). The anti-drip agent can be encapsulated by a rigid copolymer, for example styrene-acrylonitrile copolymer (SAN). PTFE encapsulated in SAN is known as TSAN. TSAN comprises 50 weight percent PTFE and 50 weight percent SAN, based on the total weight of the encapsulated fluoropolymer. The SAN can comprise, for example, 75 weight percent styrene and 25 weight percent acrylonitrile based on the total weight of the copolymer. Anti-drip agents can be used in amounts of 0.1 to 10 weight percent, or 0.1 to 1 weight percent, or 0.1 to 0.5 weight percent, or 0.1 to 0.3 weight percent, or 0.1 to 0.2 weight percent, each based on the total weight of the composition.

The composition can optionally further comprise a colorant, specifically a black colorant. The black colorant can comprise, for example, a carbon black pigment. The black colorant can be present in the composition in an amount of 0.1 to 2 weight percent, or 0.25 to 2 weight percent, or 0.5 to 2 weight percent, each based on the total weight of the composition.

In addition to the black colorant, the composition can optionally further comprise additional colorants (e.g., dyes or pigments). Useful pigments can include, for example, inorganic pigments such as metal oxides and mixed metal oxides such as zinc oxide, titanium dioxides, iron oxides, or the like; sulfides such as zinc sulfides, or the like; aluminates; sodium sulfo-silicates sulfates, chromates, or the like; carbon blacks; zinc ferrites; ultramarine blue; organic pigments such as azos, di-azos, quinacridones, perylenes, naphthalene tetracarboxylic acids, flavanthrones, isoindolinones, tetrachloroisoindolinones, anthraquinones, enthrones, dioxazines, phthalocyanines, and azo lakes; Pigment Red 101, Pigment Red 122, Pigment Red 149, Pigment Red 177, Pigment Red 179, Pigment Red 202, Pigment Violet 29, Pigment Blue 15, Pigment Blue 60, Pigment Green 7, Pigment Yellow 119, Pigment Yellow 147, Pigment Yellow 150, and Pigment Brown 24; or a combination thereof. In an aspect, the composition can optionally further include titanium dioxide. When present, the titanium dioxide can be included in an amount of 1 to 5 weight percent, or 1 to 4 weight percent, or 1 to 3 weight percent, or 2 to 3 weight percent, each based on the total weight of the composition.

The composition can optionally further comprise a mold release agent. The mold release agent can comprise, for example, a linear low density polyethylene (LLDPE). The mold release agent can be included in the composition in an amount of 0 to 2 weight percent, or 0.5 to 2 weight percent, or 1 to 2 weight percent, or 1.25 to 1.75 weight percent, each based on the total weight of the composition.

The composition can optionally further comprise a stabilizer. The stabilizer can be, for example, a heat stabilizer. Heat stabilizer additives include organophosphites (e.g. triphenyl phosphite, tris-(2,6-dimethylphenyl)phosphite, tris-(mixed mono-and di-nonylphenyl)phosphite or the like), phosphonates (e.g, dimethylbenzene phosphonate or the like), phosphates (e.g., trimethyl phosphate, or the like), or a combination thereof. The heat stabilizer can be tris(2,4-di-t-butylphenyl) phosphate available as IRGAPHOS^{™} 168. Heat stabilizers are generally used in amounts of 0.01 to 5 weight percent based on the total weight of polymer in the composition. For example, the stabilizer can be present in an amount of 0.01 to 1 weight percent, based on the total weight of the composition.

The composition can optionally further comprise a hydrocarbon resin. Examples of hydrocarbon resins are aliphatic hydrocarbon resins, hydrogenated aliphatic hydrocarbon resins, aliphatic/aromatic hydrocarbon resins, hydrogenated aliphatic/aromatic hydrocarbon resins, cycloaliphatic hydrocarbon resins, hydrogenated cycloaliphatic resins, cycloaliphatic/aromatic hydrocarbon resins, hydrogenated cycloaliphatic/aromatic hydrocarbon resins, hydrogenated aromatic hydrocarbon resins, polyterpene resins, terpene-phenol resins, rosins, and rosin esters, hydrogenated rosins and rosin esters, and mixtures thereof. As used herein, "hydrogenated", when referring to the hydrocarbon resin, includes fully, substantially, and partially hydrogenated resins. Suitable aromatic resins include aromatic modified aliphatic resins, aromatic modified cycloaliphatic resins, and hydrogenated aromatic hydrocarbon resins having an aromatic content of 1 to 30 weight percent. Any of the above resins may be grafted with an unsaturated ester or anhydride using methods known in the art. Such grafting can provide enhanced properties to the resin. In an aspect, the hydrocarbon resin is a hydrogenated aromatic hydrocarbon resin.

Suitable hydrocarbon resins are commercially available and include, for example, EMPR 100, 101, 102, 103, 104, 105, 106, 107, 108, 109, 110, 116, 117, and 118 resins, and OPPERA resins, available from ExxonMobil Chemical Company; ARKON P140, P125, P115, M115, and M135, and SUPER ESTER rosin esters available from Arakawa Chemical Company of Japan; SYLVARES polyterpene resins, styrenated terpene resins and terpene phenolic resins available from Arizona Chemical Company; SYLVATAC and SYLVALITE rosin esters available from Arizona Chemical Company; NORSOLENE aliphatic aromatic resins available from Cray Valley; DERTOPHENE terpene phenolic resins and DERCOLYTE polyterpene resins available from DRT Chemical Company; EASTOTAC resins, PICCOTAC resins, REGALITE and REGALREZ hydrogenated cycloaliphatic/aromatic resins, and PICCOLYTE and PERMALYN polyterpene resins, rosins, and rosin esters available from Eastman Chemical Company; WINGTACK resins available from Goodyear Chemical Company; coumarone/indene resins available from Neville Chemical Company; QUINTONE acid modified C5 resins, C5/C9 resins, and acid-modified C5/C9 resins available from Nippon Zeon; and CLEARON hydrogenated terpene resins available from Yasuhara.

In an aspect, the hydrocarbon resins have softening points of 80 to 180°C, specifically 100 to 170°C, more specifically 110 to 150°C, and still more specifically 120 to 130°C. Softening point is measured as a ring and ball softening point according to ASTM E28-99. A specific hydrocarbon resin is ARKON P125, which has a softening point of 125°C.

The composition can include the hydrocarbon resin in an amount of 1 to 5 weight percent composition, or 1 to 4 weight percent, or 2 to 3 weight percent, each based on the total weight of the composition.

In an aspect, the poly(phenylene ether) composition of the present disclosure can comprise 3 to 28 weight percent of the poly(phenylene ether)-poly(siloxane) block copolymer reaction product comprising a poly(phenylene ether)-poly(siloxane) block copolymer and a poly(phenylene ether); 0 to 70 weight percent of the second poly(phenylene ether); 5 to 20 weight percent of the organophosphate ester; 3 to 15 weight percent of the reinforcing filler comprising glass fibers; and an impact modifier selected from 15 to 30 weight percent of the high impact polystyrene; or 3 to 10 weight percent of the hydrogenated block copolymer of an alkenyl aromatic and a conjugated diene.

In an aspect, the poly(phenylene ether) composition can comprise 3 to 70 weight percent of the poly(phenylene ether)-poly(siloxane) block copolymer reaction product; 0 to 30 weight percent of the second poly(phenylene ether); 5 to 20 weight percent of the organophosphate ester; 5 to 15 weight percent of the reinforcing filler comprising glass fibers; 15 to 30 weight percent of the high impact polystyrene; 0 to 0.2 weight percent of an anti-drip agent; and optionally, 0.5 to 2 weight percent of a black colorant.

In an aspect, the poly(phenylene ether) composition can comprise 5 to 25 weight percent of the poly(phenylene ether)-poly(siloxane) block copolymer reaction product; 38 to 68 weight percent of the second poly(phenylene ether); 10 to 15 weight percent of the organophosphate ester; 3 to 15 weight percent of the reinforcing filler comprising glass fibers; and 3 to 10 weight percent of the hydrogenated block copolymer of an alkenyl aromatic and a conjugated diene; 1 to 5 weight percent of a hydrocarbon resin; 0 to 0.3 weight percent of an anti-drip agent; 0 to 2 weight percent of a mold release agent; 0 to 1 weight percent of stabilizers; 1 to 5 weight percent of titanium dioxide, hydroxyl apatite; or a combination thereof; and optionally, 0.5 to 2 weight percent of a black colorant. It will be understood that in this aspect, any of the foregoing aspects, or any of the following aspect, the combined amount of each component in the composition totals 100 weight percent.

In an aspect, the poly(phenylene ether) composition can comprise 5 to 20 weight percent of the poly(phenylene ether)-poly(siloxane) block copolymer reaction product; 40 to 65 weight percent of the second poly(phenylene ether); 10 to 15 weight percent of the organophosphate ester; 5 to 10 weight percent of the reinforcing filler comprising glass fibers; and 3 to 8 weight percent of the hydrogenated block copolymer of an alkenyl aromatic and a conjugated diene; 0 to 0.3 weight percent of an anti-drip agent; 0 to 2 weight percent of a mold release agent; 0 to 1 weight percent of stabilizers; 1 to 5 weight percent of titanium dioxide, hydroxyl apatite; or a combination thereof; and optionally, 0.5 to 2 weight percent of a black colorant.

In an aspect, the poly(phenylene ether) composition can comprise 5 to 20 weight percent of the poly(phenylene ether)-poly(siloxane) block copolymer reaction product; 40 to 65 weight percent of the second poly(phenylene ether); 10 to 15 weight percent of the organophosphate ester; 3 to 15 weight percent of the reinforcing filler comprising glass fibers; and 3 to 8 weight percent of a hydrogenated block copolymer of an alkenyl aromatic and a conjugated diene; 1 to 5 weight percent of hydroxylapatite; 1 to 5 weight percent of titanium dioxide; 0 to 0.3 weight percent of an anti-drip agent; 0 to 2 weight percent of a mold release agent; 0 to 1 weight percent of stabilizers; and optionally, 0.5 to 2 weight percent of a black colorant.

The poly(phenylene ether) composition of the present disclosure can exhibit several advantageous properties, as further discussed in the working examples below. For example, the poly(phenylene ether) composition can exhibit a UL-94 flammability rating of V0, measured using 1.5 millimeter test bars after conditioning at 23°C for 48 hours and at 70°C for 168 hours. The poly(phenylene ether) composition can exhibit a UL-94 flammability rating of V0, measured using 1.0 millimeter test bars after conditioning at 23°C for 48 hours and at 70°C for 168 hours. The poly(phenylene ether) composition can exhibit a comparative tracking index of greater than or equal to 175 volts, preferably greater than or equal to 250 volts. The poly(phenylene ether) composition can exhibit a notched Izod impact strength of greater than or equal to 7 kJ/m, measured according to ISO 180. The poly(phenylene ether) composition can exhibit a melt volume flow rate of greater than or equal to 14 cubic centimeters per 10 minutes, measured at 280°C and a 10 kg load according to ISO 1133 or ASTM D1238. The poly(phenylene ether) composition can exhibit a heat deflection temperature of greater than or equal to 120°C, measured according to ISO 75/f or ASTM D648. The poly(phenylene ether) composition can exhibit one or more of the foregoing properties.

Preferably, the composition exhibits a UL-94 flammability rating of V0, measured using 1.5 millimeter test bars after conditioning at 23°C for 48 hours and at 70°C for 168 hours; and a comparative tracking index of greater than or equal to 250 volts; and optionally, one or more of: a UL-94 flammability rating of V0, measured using 1.0 millimeter test bars after conditioning at 23°C for 48 hours and at 70°C for 168 hours; a notched Izod impact strength of greater than or equal to 7 kJ/m², measured according to ISO 180; a melt volume rate of greater than or equal to 14 cubic centimeters per 10 minutes, measured at 280°C and a 10 kg load according to ISO 1133 or ASTM D1238; and a heat deflection temperature of greater than or equal to 120°C, measured according to ISO 75/f or ASTM D648.

The poly(phenylene ether) composition can be made by melt-blending or melt-kneading the components of the composition. The melt-blending or melt-kneading can be performed using common equipment such as ribbon blenders, HENSCHEL^{™} mixers, BANBURY^{™} mixers, drum tumblers, single-screw extruders, twin-screw extruders, multi-screw extruders, co-kneaders, and the like.

The poly(phenylene ether) composition of the present disclosure can be useful for forming various articles. Articles can be formed by any suitable method, for example including single layer and multilayer sheet extrusion, injection molding, blow molding, film extrusion, profile extrusion, pultrusion, compression molding, thermoforming, pressure forming, hydroforming, vacuum forming, and the like. Combinations of the foregoing article fabrication methods can be used. Exemplary articles can include, but are not limited to an electric vehicle battery module, an electrical component, a thermoset circuit breaker, a fuser holder for an electrographic copier, a photovoltaic junction box connector, and automotive electrical connector, an electrical relay, a charge coupler, or an appliance component. In a specific aspect, the poly(phenylene ether) composition can be particularly useful for an electric vehicle battery module.

This disclosure is further illustrated by the following examples, which are nonlimiting.

### EXAMPLES

Materials used for the following examples are shown in Table 1.

**Table 1**

| Component | Description |
|---|---|
| PPE 0.46 | Poly(2,6-dimethyl-1,4-phenylene ether), CAS Reg. No. 24938-67-8, having an intrinsic viscosity of 0.46 deciliter per gram as measured in chloroform at 25°C; obtained as PPO 646 from SABIC. |
| PPE 0.40 | Poly(2,6-dimethyl-1,4-phenylene ether), CAS Reg. No. 24938-67-8, having an intrinsic viscosity of 0.40 deciliter per gram as measured in chloroform at 25°C; obtained as PPO 640 from SABIC. |
| PPE-Si | A mixture of poly(2,6-dimethyl-1,4-phenylene ether) (CAS Reg. No. 24938-67-8) and poly(2,6-dimethyl-1,4-phenylene ether-polydimethylsiloxane block copolymer (CAS Reg. No. 1202019-56-4), the mixture having a polysiloxane content of 5 weight percent and an intrinsic viscosity of 0.40 deciliter per gram as measured in chloroform at 25°C; prepared according to the procedure of U.S. Patent No. 8,017,697 to Carrillo et al., Example 16. |
| TBPP | Tris(2,4-di-tert-butylphenyl) phosphite, CAS Reg. No. 31570-04-4; obtained as IRGAFOS^{™} 168 from BASF Corp. |
| ZnO | Zinc Oxide, CAS NO. 1314-13-2. |
| ZnS | Zinc sulfide, CAS Reg. No. 1314-98-3, available from Sachtleben Chemie GmbH as SACHTOLITH^{™}HD-S. |
| TSAN | Poly(styrene-acrylonitrile)-encapsulated polytetrafluoroethylene, containing 50 weight percent polytetrafluoroethylene; obtained as CYCLOLAC^{™} INP449 from SABIC. |
| LLDPE | Linear low density polyethylene, CAS Reg. No. 25087-34-7, having a density of 0.925 grams per cubic centimeter and a melt volume-flow rate of 20 cubic centimeters per 10 minutes at 190°C and 2.16 kilogram load; obtained as ESCORENE^{™} LL5100.09 from ExxonMobil. |
| CB | Carbon black pigment, CAS Reg. No. 1333-86-4, obtained as BLACKPEARLS^{™} 800 or MONARCH^{™} 800 from Cabot Corp. |
| HCR | Hydrocarbon resin, CAS Reg. No. 123465-34-9; obtained as ARKON^{™} P-125 from Arakawa Chemical Industries, Ltd. in pellet form and ground to a powder before use. |
| SEBS | Polystyrene-poly(ethylene-butylene)-polystyrene triblock copolymer, CAS Reg. No. 66070-58-4, having a polystyrene content of 30-33 weight percent and a negligible melt flow, measured at 260 °C and 5 kilogram load according to ASTM D1238, and a weight average molecular weight of 240,000-301,000; obtained as KRATON^{™} G1651 from Kraton Performance Polymers Inc |
| SEBS MB in PPE | Polystyrene-poly(ethylene-butylene)-polystyrene triblock copolymer with 10% poly(phenylene ether) |
| CIS-1 | High-impact polystyrene (rubber-modified polystyrene), CAS Reg. No. 9003-55-8, having a volume average particle diameter of 0.5-1 micrometers, and a cis-poly(butadiene) content of 9.7 to 11.1 weight percent; obtained as HIPS3190 from SABIC |
| CIS-2 | High-impact polystyrene (rubber-modified polystyrene), CAS Reg. No. 9003-55-8, having a cis-poly(butadiene) content of 8 to 10 weight percent; obtained as POLYSTYRENE IMPACT 5240 from Total Petrochemicals |
| RDP | Resorcinol bis(diphenyl phosphate), CAS Reg. No. 57583-54-7; obtained as FYROFLEX^{™} RDP from ICL-IP or as CR733S from Daihachi |
| BPADP | Bisphenol A bis(diphenyl phosphate), CAS Reg. No. 5945-33-5; obtained as FYROFLEX^{™} BDP from ICL-IP |
| GF | Chopped glass fibers having a diameter of 14 micrometers, a pre-compounded length of 4 millimeters, obtained as 122Y-14C from Owens Corning. |
| TCP | Pentacalcium hydroxide tris(orthophosphate), CAS. Reg. No. 1306-06-5, having an average particle size of 1-10 micrometers, obtained as C13-09 fromChemishe Fabrik Budenheim KG |
| TiO₂ | Titanium dioxide having an average particle size of 0.18-0.28 micrometers, obtained from Kronos. |

The compositions of the following examples were prepared by melt-blending in a Werner & Pfleiderer 28 millimeter internal diameter twin-screw extruder operated at 300 rotations per minute and a material throughput of 8-20 kilograms/hour (35 pounds/hour). Flame retardant and glass fibers were fed into the downstream port using separate feeders for each, while all other solid components were added at the feed throat. The extruder temperature was maintained at 180°C (464°F) in zone 1 (the most upstream zone), at 260-320°C (500°F) in zones 2-10, and at 300-320°C (550°F) at the die. The torque was maintained at ~65%. The compounded extrudate was cooled and pelletized by strand-cutting.

All materials were blended together and fed by the main feeder. The strand of extruded composition was cut into pellets and dried. Test articles were injection molded on a 90 Ton and 110 Ton VanDorn injection molding machine using a barrel temperature of 270-320°C (550-590°F) and a mold temperature of 100-120°C (190°F).

Test articles for ASTM and ISO determinations of various physical properties were injection molded on a 90 Ton and 110 Ton VanDorn injection molding machine using a barrel temperature of 270-320°C (550-590°F) and a mold temperature of 100-120°C (190-210°F). Flame bars with 0.75 or 1.0 or 1.5 millimeter thickness were injection molded on an 90 Ton VanDorn injection molding machine using a barrel temperature of 270-320°C (570-610°F) and a mold temperature of 100-120°C (190-210°F).

Molded samples of the compositions were characterized according to the following tests. Flexural modulus and flexural strength, expressed in units of megapascals, were measured at 23° C according to ASTM D790 using a 3.2 millimeter bar at a test speed of 1.3 millimeter/minute or according to ISO 178. Unnotched and notched Izod impact strength (IUI and INI, respectively), expressed in units of joules/meter, were measured according to ASTM D256, at 23°C and -30°C with a 5.5 Joule hammer and a 3.2 millimeter test bar or according to ISO 180, reported in kJ/m². Tensile stress at break, expressed in units of megapascals (MPa), and tensile strain at break, expressed in units of percent, were measured at 23° C, according to ASTM D638 using a test speed of 5 millimeters per minute or according to ISO 527. Tensile modulus, expressed in units of megapascals (MPa), was measured at 23° C, according to ASTM D638 or according to ISO 527 using a test speed of 5 millimeters per minute. Heat deflection temperature was measured according to ASTM D648 using a 3.2 millimeter test bar or ISO75/f at a stress of 1.8 megapascals and expressed in units of degrees Celsius. Specific gravity, was measured according to ASTM D792 or density, expressed in grams per cubic centimeter, was measured according to ISO1183, at 23° C. Melt volume rate (MVR), expressed in units of cubic centimeter per 10 minutes, was measured according to ASTM D1238 or according to ISO 11443, at 280° C and 10 kilogram load. The apparent melt viscosity (MV), expressed in units of Pa-s, was measured according to ISO 11443, at a shear rate of 1500 s⁻¹ at 300°C. Vicat B values, expressed in degrees C, were determined according to ASTM D1525 (3.2mm), Method B120.

Flame retardancy of injection molded flame bars was determined according to Underwriter's Laboratory Bulletin 94 "Tests for Flammability of Plastic Materials, UL 94", 20 mm Vertical Burning Flame Test. Before testing, flame bars with a thickness of 1.5 millimeters were conditioned at 23°C and 50% relative humidity for at least 48 hours or at 70°C and 50% relative humidity for 168 hours. In the UL 94 20 mm Vertical Burning Flame Test, a set of ten to twenty flame bars was tested. For each bar, a flame was applied for 10 seconds to the bar then removed, and the time required for the bar to self-extinguish (first after flame time, t1) was noted. The flame was then reapplied for 10 seconds and removed, and the time required for the bar to self-extinguish (second after flame time, t2) and the post-flame glowing time (afterglow time, t3) were noted. To achieve a rating of V-0, the after flame times t1 and t2 for each individual specimen must have been less than or equal to 10 seconds; and the total after flame time for all five specimens (t1 plus t2 for all five specimens) must have been less than or equal to 50 seconds; and the second after flame time plus the afterglow time for each individual specimen (t2 + t3) must have been less than or equal to 30 seconds; and no specimen can have flamed or glowed up to the holding clamp; and the cotton indicator cannot have been ignited by flaming particles or drops. To achieve a rating of V-1, the after flame times t1 and t2 for each individual specimen must have been less than or equal to 30 seconds; and the total after flame time for all five specimens (t1 plus t2 for all five specimens) must have been less than or equal to 250 seconds; and the second after flame time plus the afterglow time for each individual specimen (t2 + t3) must have been less than or equal to 60 seconds; and no specimen can have flamed or glowed up to the holding clamp; and the cotton indicator cannot have been ignited by flaming particles or drops. To achieve a rating of V-2, the after flame times t1 and t2 for each individual specimen must have been less than or equal to 30 seconds; and the total after flame time for all five specimens (t1 plus t2 for all five specimens) must have been less than or equal to 250 seconds; and the second after flame time plus the afterglow time for each individual specimen (t2 + t3) must have been less than or equal to 60 seconds; and no specimen can have flamed or glowed up to the holding clamp; but the cotton indicator can have been ignited by flaming particles or drops.

Comparative Tracking Index (CTI) is used to measure the electrical breakdown (tracking) properties of an insulating material. Tracking is a measure of electrical breakdown on the surface of an insulating material. A large voltage difference gradually creates a conductive leakage path across the surface of the material by forming a carbonized track. The CTI testing procedure was carried as described in ASTM D3638 test method. Briefly, the testing procedure involved adding 50 drops of a 0.1 wt% ammonium chloride solution dropwise to the surface of the material (3 mm thickness), followed by determination of the maximum voltage at which failure occurred. Based on the tracking index, the sample is assigned a Comparative Tracking Performance Level Category (PLC). Comparative Tracking Performance Level Categories are described in Table 2.

**Table 2**

| Tracking Index Range (volts) | PLC |
|---|---|
| 600 ≤ TI | 0 |
| 400 ≤ TI < 600 | 1 |
| 250 ≤ TI < 400 | 2 |
| 175 ≤ TI < 250 | 3 |
| 100 ≤ TI < 175 | 4 |
| 0 ≤ TI < 100 | 5 |

Compositions and properties are summarized in Tables 3A-3E. The amount of each component is provided in weight percent based on the total weight of the composition.

**Table 3A**

| Component | Standard | Unit | CE1 | CE2 | E1 | E2 | E3 | E4 | E5 | CE3 | CE4 | CE5 | CE6 | E6 | E7 | E8 |
|---|---|---|---|---|---|---|---|---|---|---|---|---|---|---|---|---|
| PPE 0.46 | | % | | 54.7 | | | | | | | | | | | | |
| PPE 0.40 | | % | 64 | | | | | 27.35 | 42.7 | 54.7 | 53.7 | 54.35 | 53.7 | 42.2 | 41.2 | |
| PPE-Si | | % | | | 64 | 54.7 | 54.7 | 27.35 | 12 | | | | | 12 | 12 | 54.7 |
| TBPP | | % | 0.3 | | 0.3 | | | | | | | | | | | |
| ZnO | | % | 0.1 | | 0.1 | | | | | | | | | | | |
| ZnS | | % | 0.1 | | 0.1 | | | | | | | | | | | |
| TSAN | | % | | 0.15 | | 0.15 | 0.15 | 0.15 | 0.15 | 0.15 | 0.15 | 0.15 | 0.15 | 0.15 | 0.15 | 0.15 |
| LLDPE | | % | 1.5 | | 1.5 | | | | | | | | | | | |
| CB | | % | 0.5 | 0.5 | 0.5 | 0.5 | 0.5 | 0.5 | 0.5 | 0.5 | 0.5 | 0.5 | 0.5 | 0.5 | 0.5 | 0.5 |
| HCR | | % | | | | | | | | | 3 | | 3 | | | |
| SEBS | | % | | | | | | | | | | 3 | 3 | | | |
| CIS-2 | | % | 17.5 | 28.15 | 17.5 | 28.15 | 25.15 | 25.15 | 25.15 | 25.15 | 23.15 | 20 | 17.65 | 23.15 | 23.15 | 22.65 |
| RDP | | % | 7.5 | 6.5 | | | | | | | | | | | | |
| BPADP | | % | | | 7.5 | 6.5 | 9.5 | 9.5 | 9.5 | 9.5 | 9.5 | 12 | 12 | 10 | 10 | 10 |
| GF | | % | 10 | 10 | 10 | 10 | 10 | 10 | 10 | 10 | 10 | 10 | 10 | 10 | 10 | 10 |
| TCP | | | | | | | | | | | | | | 2 | 3 | 2 |
| Total Si content | | % | 0.00 | 0.00 | 3.20 | 2.74 | 2.74 | 1.37 | 0.60 | 0.00 | 0.00 | 0.00 | 0.00 | 0.6 | 0.6 | 2.74 |
| Property | Standard | Unit | | | | | | | | | | | | | | |
| MV | ISO 11443 | Pa-s | 271 | 233 | 252 | 221 | 186 | 195 | 195 | 201 | 180 | 180 | 163 | 181 | 178 | 174 |
| MVR | ASTM D1238 | cc/10min | 11 | 12 | 8 | 11 | 17 | 17 | 20 | 18 | 23 | 27 | 33 | 23 | 22 | 18.2 |
| HDT | ASTM D648 | °C | 141 | 133 | 139 | 132 | 126 | 128 | 135 | 136 | 134 | 123 | 122 | 127 | 126 | 124 |
| Vicat B120 | ASTM D1525 | °C | 153 | 144 | 151 | 144 | 138 | 140 | 141 | 143 | 140 | 136 | 135 | 139 | 138 | 136 |
| INI, RT | ASTM D256 | J/m | 66 | 72 | 80 | 80 | 76 | 66 | 70 | 67 | 65 | 79 | 80 | 64.9 | 59.7 | 71.8 |
| IUI, RT | ASTM D256 | J/m | 466 | 461 | 502 | 492 | 480 | 452 | 457 | 444 | 427 | 400 | 431 | 431 | 397 | 437 |
| INI, -30°C | ASTM D256 | J/m | 46 | 48 | 59 | 53 | 51 | 49 | 48 | 47 | 46 | 58 | 56 | 45 | 40.9 | 49.6 |
| Tens. Mod. | ASTM D638 | MPa | 4412 | 4399 | 4258 | 4250 | 4352 | 4381 | 4426 | 4502 | 4464 | 4287 | 4303 | 4647 | 4710 | 4459 |
| Tens. Stress | ASTM D638 | MPa | 85 | 85 | 80 | 79 | 82 | 84 | 86 | 89 | 88 | 81 | 82 | 88 | 87 | 81 |
| Nominal Strain @ brk | ASTM D638 | % | 4 | 4 | 3 | 4 | 3 | 3 | 4 | 4 | 3 | 3 | 3 | 3.6 | 3.5 | 3.4 |
| Flex. Mod. | ASTM D790 | MPa | 3990 | 3920 | 3710 | 3710 | 3720 | 3810 | 3860 | 3980 | 4020 | 4080 | 4050 | 4423 | 4335 | 4117 |
| Flex. Strength @ yield | ASTM D790 | MPa | 150 | 146 | 137 | 138 | 135 | 140 | 145 | 148 | 146 | 136 | 133 | | | |
| Flex. Strength @ brk | ASTM D790 | MPa | 147 | 143 | 133 | 135 | 132 | 138 | 142 | 145 | 145 | 133 | 131 | 147 | 145 | 135 |
| UL rating 1.5mm, 23°C/48 hrs | UL-94 | | V1 | V1 | V0 | V1 | V0 | V0 | V0 | V1 | V1 | V1/NR | V1/NR | V0 | V0 | V0 |
| UL rating 1.5mm, 70°C/168 hours | UL-94 | | V1 | V1/ NR | | | | V0 | V0 | | | NR | NR | V0 | V0 | V1 |
| UL rating 1.0mm, 23°C/48 hrs | UL-94 | | | | | | | | V0 | | | | | V0 | V1/V0 | |
| UL rating 1.0mm, 70°C/168 hours | UL-94 | | | | | | | | V0 | | | | | V1 | V1/V0 | |
| UL rating 0.75mm, 23°C/48 hrs | UL-94 | | | | | | | | V0 | | | | | V1 | V1 | |
| UL rating 0.75mm, 70°C/168 hours | UL-94 | | | | | | | | V1 | | | | | V1 | V1 | |
| Specific Gravity | ASTM D792 | | 1.16 | 1.16 | 1.15 | 1.14 | 1.16 | 1.16 | 1.16 | 1.17 | 1.16 | 1.15 | 1.14 | 1.183 | 1.192 | 1.180 |
| CTI PLC | ASTM D3638 | PLC | PLC 3 | PLC 3 | PLC 3 | PLC 3 | PLC 3 | PLC 3 | PLC 3 | PLC 3 | PLC 3 | PLC 3 | PLC 3 | PLC 2 | PLC 2 | PLC 2 |

**Table 3B**

| Component | Standard | Unit | CE7 | CE8 | CE9 | CE10 | CE11 | E9 | E10 |
|---|---|---|---|---|---|---|---|---|---|
| PPE 0.40 | | % | 70 | | 52.5 | 64 | 65.8 | 50.25 | 61.45 |
| PPE-Si | | % | | 70 | 17.5 | 6 | 4.2 | 17.2 | 6 |
| TBPP | | % | 0.5 | 0.5 | 0.5 | 0.5 | 0.5 | 0.5 | 0.5 |
| ZnO | | % | 0.15 | 0.15 | 0.15 | 0.15 | 0.15 | 0.15 | 0.15 |
| ZnS | | % | 0.15 | 0.15 | 0.15 | 0.15 | 0.15 | 0.15 | 0.15 |
| TSAN | | % | 0.2 | 0.2 | 0.2 | 0.2 | 0.2 | 0.2 | 0.2 |
| LLDPE | | % | 1.5 | 1.5 | 1.5 | 1.5 | 1.5 | 1.5 | 1.5 |
| CB | | % | 0.5 | 0.5 | 0.5 | 0.5 | 0.5 | 0.5 | 0.5 |
| SEBS | | % | 5 | 5 | 5 | 5 | 5 | | |
| SEBS MB in PPE | | | | | | | | 5.55 | 5.55 |
| BPADP | | % | 12 | 12 | 12 | 12 | 12 | 12 | 12 |
| GF | | % | 10 | 10 | 10 | 10 | 10 | 10 | 10 |
| TCP | | | | | | | | 2 | 2 |
| Total Si content | | % | 0.00 | 3.50 | 0.88 | 0.30 | 0.21 | 0.86 | 0.3 |
| Property | Standard | Unit | | | | | | | |
| MV | ISO 11443 | Pa-s | 300 | 256 | 291 | 296 | 299 | 307 | 304 |
| MVR | ASTM D1238 | cc/10min | 11 | 11 | 11 | 11 | 11 | 7.02 | 8.57 |
| HDT | ASTM D648 | °C | 145 | 137 | 144 | 143 | 141 | 144 | 145 |
| Vicat B120 | ASTM D1525 | °C | 158 | 151 | 156 | 156 | 153 | 155 | 156 |
| INI, RT | ASTM D256 | J/m | 93 | 102 | 97 | 94 | 94 | 80.8 | 83.5 |
| IUI, RT | ASTM D256 | J/m | 519 | 498 | 526 | 513 | 516 | 533 | 527 |
| INI, -30°C | ASTM D256 | J/m | 65 | 76 | 70 | 67 | 68 | 51.1 | 50.7 |
| Tens. Mod. | ASTM D638 | MPa | 4330 | 4087 | 4279 | 4352 | 4526 | 4432 | 4438 |
| Tens. Stress | ASTM D638 | MPa | 85 | 77 | 83 | 83 | 86 | 84 | 86 |
| Nominal Strain @ brk | ASTM D638 | % | 4 | 4 | 4 | 4 | 4 | 3.5 | 3.5 |
| Flex. Mod. | ASTM D790 | MPa | 3920 | 3560 | 3760 | 3860 | 4060 | 3852 | 3922 |
| Flex. Strength @ yield | ASTM D790 | MPa | 143 | 128 | 138 | 142 | 146 | 136 | 140 |
| Flex. Strength @ brk | ASTM D790 | MPa | 138 | 125 | 134 | 137 | 141 | 132 | 136 |
| UL rating 1.5mm, 23°C/48 hrs | UL-94 | | NR | V0 | V0 | V0 | V0 | V0 | V0 |
| UL rating 1.5mm, 70°C/168 hours | UL-94 | | NR | V0 | V0 | V0 | V1 | V0 | V0 |
| Specific Gravity | ASTM D792 | | 1.15 | 1.14 | 1.14 | 1.14 | 1.18 | 1.181 | 1.18 |
| CTI PLC | ASTM D3638 | PLC | PLC 3 | PLC 3 | PLC 3 | PLC 3 | PLC 3 | PLC 2 | PLC 2 |

**Table 3C**

| Component | Standard | Unit | CE10b | CE12 | CE13 | CE14 | CE15 | CE16 | CE17 | CE18 | CE19 |
|---|---|---|---|---|---|---|---|---|---|---|---|
| PPE 0.40 | | % | 64 | 63.2 | 52.08 | 63.2 | 48.91 | 59.35 | 48.17 | 58.44 | 44.22 |
| PPE-Si | | % | 6 | 6.24 | 17.36 | 6.24 | 16.31 | 5.87 | 16.05 | 5.78 | 20 |
| TBPP | | % | 0.5 | 0.5 | 0.5 | 0.5 | 0.5 | 0.5 | 0.5 | 0.5 | 0.5 |
| ZnO | | % | 0.15 | 0.15 | 0.15 | 0.15 | 0.15 | 0.15 | 0.15 | 0.15 | 0.15 |
| ZnS | | % | 0.15 | 0.15 | 0.15 | 0.15 | 0.15 | 0.15 | 0.15 | 0.15 | 0.15 |
| TSAN | | % | 0.2 | 0.2 | 0.2 | 0.2 | 0.2 | 0.2 | 0.2 | 0.2 | 0.2 |
| LLDPE | | % | 1.5 | 1.5 | 1.5 | 1.5 | 1.5 | 1.5 | 1.5 | 1.5 | 1.5 |
| CB | | % | 0.5 | 0.5 | 0.5 | 0.5 | 0.5 | 0.5 | 0.5 | 0.5 | 0.5 |
| HCR | | % | | | | | 3 | 3 | 3 | 3 | 3 |
| SEBS | | % | 5 | | | | | | | | |
| SEBS MB in PPE | | % | | 5.56 | 6.56 | 6.56 | 7.78 | 7.78 | 7.78 | 7.78 | 7.78 |
| BPADP | | % | 12 | 12 | 12 | 12 | 13 | 13 | 14 | 14 | 14 |
| GF | | % | 10 | 10 | 9 | 9 | 8 | 8 | 8 | 8 | 8 |
| Total Si content | | | 0.30 | 0.31 | 0.87 | 0.31 | 0.82 | 0.29 | 0.80 | 0.29 | 1.00 |
| Property | Standard | Unit | | | | | | | | | |
| MV | ISO 11443 | Pa-s | 296 | 299 | 278 | 315 | 249 | 230 | 204 | 217 | 224 |
| MVR | ISO 1133 | cc/10min | 10 | 10 | 12 | 10 | 14 | 17 | 21 | 20 | 19 |
| HDT | ISO75/f | °C | 144 | 143 | 139 | 143 | 134 | 132 | 126 | 129 | 127 |
| INI, RT | ASTM D256 | J/m | 97 | 98 | 105 | 101 | 108 | 107 | 109 | 106 | 109 |
| IUI, RT | ASTM D256 | J/m | 538 | 514 | 520 | 533 | 527 | 503 | 520 | 522 | 498 |
| INI, -30°C | ASTM D256 | J/m | 59 | 59 | 69 | 60 | 65 | 67 | 64 | 61 | 68 |
| INI, RT | ISO180 | kJ/m² | 9.4 | 9.6 | 10.3 | 9.8 | 10.7 | 10.9 | 10.9 | 11.1 | 11.0 |
| IUI, RT | ISO180 | kJ/m² | 32 | 34 | 31 | 34 | 34 | 33 | 32 | 33 | 31 |
| INI, -30°C | ISO180 | kJ/m² | 5.8 | 6.5 | 6.9 | 6.5 | 6.3 | 6.2 | 6.0 | 6.9 | 6.5 |
| Tens. Mod. | ISO527 | MPa | 4299 | 4263 | 4025 | 4068 | 3909 | 3760 | 3769 | 3819 | 3732 |
| Tens. Stress | ISO527 | MPa | 85 | 84 | 79 | 81 | 76 | 75 | 73 | 75 | 73 |
| Nominal Strain @ brk | ISO527 | % | 3.6 | 3.6 | 3.5 | 3.6 | 3.5 | 3.5 | 3.5 | 3.6 | 3.5 |
| Flex. Mod. | ISO178 | MPa | 3536 | 3525 | 3397 | 3397 | 3248 | 3175 | 3124 | 3156 | 3132 |
| Flex. Strength @ yield | ISO178 | MPa | 131 | 131 | 126 | 128 | 120 | 119 | 117 | 118 | 117 |
| Flex. Strength @ brk | ISO178 | MPa | 121 | 124 | 117 | 121 | 112 | 107 | 109 | 106 | 108 |
| UL rating 1.5mm, 23°C/48 hrs | UL-94 | | V0 | V0 | V0 | V0 | V0 | V1 | V0 | V1 | V0 |
| UL rating 1.5mm, 70°C/168 hours | UL-94 | | V0 | V0 | V1 | V1 | V0 | V1 | V0 | V1 | V0 |
| Density | ISO1183 | g/cm³ | 1.157 | 1.162 | 1.155 | 1.154 | 1.149 | 1.145 | 1.141 | 1.142 | 1.150 |
| CTI PLC | ASTM D3638 | PLC | PLC 3 | PLC 3 | PLC 3 | PLC 3 | PLC 3 | PLC 3 | PLC 3 | PLC 3 | PLC 3 |

**Table 3D**

| Component | Standard | Unit | CE20 | CE21 | CE22 | CE23 | CE24 | CE25 |
|---|---|---|---|---|---|---|---|---|
| PPE 0.40 | | % | 49.92 | 51.1 | 50.92 | 52.2 | 58.5 | 57.4 |
| PPE-Si | | % | 16.3 | 16.3 | 16.3 | 16.3 | 10 | 10 |
| TBPP | | % | 0.5 | 0.5 | 0.5 | 0.5 | 0.5 | 0.5 |
| ZnO | | % | 0.15 | 0.15 | 0.15 | 0.15 | 0.15 | 0.15 |
| ZnS | | % | 0.15 | 0.15 | 0.15 | 0.15 | 0.15 | 0.15 |
| TSAN | | % | 0.2 | 0.2 | 0.2 | 0.3 | 0.3 | 0.2 |
| LLDPE | | % | 1.5 | 1.5 | 1.5 | 1.5 | 1.5 | 1.5 |
| CB | | % | 0.5 | 0.5 | 0.5 | 0.3 | 0.3 | 0.5 |
| HCR | | % | 2 | 2 | 2 | 2 | 2 | 2 |
| SEBS MB in PPE | | % | 7.78 | 6.6 | 7.78 | 6.6 | 6.6 | 6.6 |
| BPADP | | % | 14 | 14 | 14 | 14 | 14 | 14 |
| GF | | % | 7 | 7 | 6 | 6 | 6 | 7 |
| Total Si content | | | 0.82 | 0.82 | 0.82 | 0.82 | 0.50 | 0.50 |
| Property | Standard | Unit | | | | | | |
| MV | ISO 11443 | Pa-s | 231 | 192 | 232 | 222 | 227 | 218 |
| MVR | ISO 1133 | cc/10min | 18 | 25 | 18 | 19 | 20 | 20 |
| HDT | ISO75/f | °C | 131 | 127 | 131 | 131 | 133 | 133 |
| INI, RT | ISO180 | kJ/m² | 10.7 | 10.0 | 11.3 | 10.3 | 10.2 | 10.5 |
| IUI, RT | ISO180 | kJ/m² | 31 | 31 | 32 | 31 | 32 | 31 |
| INI, -30°C | ISO180 | kJ/m² | 6.6 | 5.7 | 6.1 | 5.9 | 6.2 | 6.3 |
| Tens. Mod. | ISO527 | MPa | 3586 | 3635 | 3395 | 3496 | 3485 | 3629 |
| Tens. Stress | ISO527 | MPa | 73 | 74 | 71 | 74 | 73 | 75 |
| Nominal Strain @ brk | ISO527 | % | 3.9 | 3.9 | 4.1 | 4.1 | 4.2 | 3.9 |
| Flex. Mod. | ISO178 | MPa | 3119 | 3188 | 2959 | 2992 | 2987 | 3217 |
| Flex. Strength @ yield | ISO178 | MPa | 117 | 120 | 114 | 117 | 117 | 121 |
| Flex. Strength @ brk | ISO178 | MPa | 109 | 111 | 89 | 104 | 101 | 113 |
| UL rating 1.5mm, 23°C/48 hrs | UL-94 | | V0 | V0 | V0 | V0 | V0 | V0 |
| UL rating 1.5mm, 70°C/168 hours | UL-94 | | V0 | V0 | V0 | V0 | V0 | V0 |
| Density | ISO1183 | g/cm³ | 1.14 | 1.15 | 1.13 | 1.14 | 1.14 | 1.14 |
| CTI PLC | ASTM D3638 | PLC | PLC 3 | PLC 3 | PLC 3 | PLC 3 | PLC 3 | PLC 3 |

**Table 3E**

| Component | Standard | Unit | CE26 | E11 | E12 | E13 | E14 | E15 | E16 | E17 | E18 | E19 |
|---|---|---|---|---|---|---|---|---|---|---|---|---|
| PPE 0.40 | | % | 50.22 | 46.92 | 55.4 | 48.22 | 46.42 | 54.9 | 47.72 | 44.92 | 53.4 | 46.22 |
| PPE-Si | | % | 14 | 16.3 | 10 | 14 | 16.3 | 10 | 14 | 16.3 | 10 | 14 |
| TBPP | | % | 0.5 | 0.5 | 0.5 | 0.5 | 0.5 | 0.5 | 0.5 | 0.5 | 0.5 | 0.5 |
| ZnO | | % | 0.15 | 0.15 | 0.15 | 0.15 | 0.15 | 0.15 | 0.15 | 0.15 | 0.15 | 0.15 |
| ZnS | | % | 0.15 | 0.15 | 0.15 | 0.15 | 0.15 | 0.15 | 0.15 | 0.15 | 0.15 | 0.15 |
| TSAN | | % | 0.2 | 0.2 | 0.2 | 0.2 | 0.2 | 0.2 | 0.2 | 0.2 | 0.2 | 0.2 |
| LLDPE | | % | 1.5 | 1.5 | 1.5 | 1.5 | 1.5 | 1.5 | 1.5 | 1.5 | 1.5 | 1.5 |
| CB | | % | 0.5 | 0.5 | 0.5 | 0.5 | 0.5 | 0.5 | 0.5 | 0.5 | 0.5 | 0.5 |
| HCR | | % | 2 | 3 | 2 | 2 | 3 | 2 | 2 | 3 | 2 | 2 |
| SEBS MB in PPE | | % | 7.78 | 7.78 | 6.6 | 7.78 | 7.78 | 6.6 | 7.78 | 7.78 | 6.6 | 7.78 |
| BPADP | | % | 14 | 13 | 14 | 14 | 13 | 14 | 14 | 13 | 14 | 14 |
| GF | | % | 9 | 8 | 7 | 9 | 8 | 7 | 9 | 8 | 7 | 9 |
| TCP | | % | | 2 | 2 | 2 | | | | 2 | 2 | 2 |
| TiO₂ | | % | | | | | 2.5 | 2.5 | 2.5 | 2 | 2 | 2 |
| Total Si content | | | 0.70 | 0.82 | 0.50 | 0.70 | 0.82 | 0.50 | 0.70 | 0.82 | 0.50 | 0.70 |
| Property | Standard | Unit | | | | | | | | | | |
| MV | ISO 11443 | Pa-s | 196 | 231 | 227 | 193 | 230 | 215 | 215 | 190 | 225 | 202 |
| MVR | ISO 1133 | cc/10min | 24 | 16 | 17 | 27 | 17 | 22 | 20 | 27 | 17 | 19 |
| HDT | ISO75/f | °C | 122 | 129 | 129 | 120 | 128 | 127 | 123 | 124 | 128 | 124 |
| INI, RT | ISO180 | kJ/m² | 10.6 | 9.7 | 8.1 | 9.8 | 9.0 | 8.6 | 9.0 | 8.4 | 6.7 | 7.2 |
| IUI, RT | ISO180 | kJ/m² | 32 | 30 | 30 | 31 | 29 | 27 | 27 | 29 | 26 | 26 |
| INI, -30°C | ISO180 | kJ/m² | 6.9 | 5.9 | 4.9 | 6.0 | 5.3 | 5.5 | 5.5 | 5.4 | 4.5 | 5.0 |
| Tens. Mod. | ISO527 | MPa | 3949 | 3790 | 3827 | 4095 | 3719 | 3603 | 3923 | 3775 | 3830 | 4136 |
| Tens. Stress | ISO527 | MPa | 76 | 75 | 78 | 77 | 68 | 70 | 70 | 68 | 74 | 74 |
| Nominal Strain @ brk | ISO527 | % | 3.7 | 3.7 | 3.9 | 3.6 | 4.1 | 4.2 | 3.9 | 3.9 | 4.0 | 3.6 |
| Flex. Mod. | ISO178 | MPa | 3346 | 3309 | 3252 | 3432 | 3157 | 3174 | 3385 | 3287 | 3312 | 3456 |
| Flex. Strength @ yield | ISO178 | MPa | 120 | 119 | 121 | 122 | 112 | 115 | 117 | 113 | 120 | 119 |
| Flex. Strength @ brk | ISO178 | MPa | 117 | 110 | 116 | 117 | 101 | 98 | 105 | 104 | 111 | 115 |
| UL rating 1.5mm, 23°C/48 hrs | UL-94 | | V0 | V0 | V0 | V0 | V0 | V0 | V0 | V0 | V0 | V0 |
| UL rating 1.5mm, 70°C/168 hours | UL-94 | | V0 | V0 | V0 | V0 | V0 | V0 | V0 | V0 | V0 | V0 |
| UL rating 1.0mm, 23°C/48 hrs | UL-94 | | | V0 | | | | | | | | |
| UL rating 1.0mm, 70°C/168 hours | UL-94 | | | V0 | | | | | | | | |
| UL rating 0.75mm, 23°C/48 hrs | UL-94 | | | V1 | | | | | | | | |
| UL rating 0.75mm, 70°C/168 hours | UL-94 | | | V0 | | | | | | | | |
| Density | ISO1183 | g/cm³ | 1.163 | 1.164 | 1.166 | 1.181 | 1.169 | 1.166 | 1.182 | 1.184 | 1.183 | 1.192 |
| CTI PLC | ASTM D3638 | PLC | PLC 3 | PLC 2 | PLC 2 | PLC 2 | PLC 2 | PLC 2 | PLC 2 | PLC 2 | PLC 2 | PLC 2 |

**Table 3F**

| Component | Standard | Unit | CE27 | CE28 |
|---|---|---|---|---|
| PPE 0.40 | | % | 52.7 | 55.7 |
| PPE-Si | | % | 16.3 | 16.3 |
| TBPP | | % | 0.5 | 0.5 |
| ZnO | | % | 0.15 | 0.15 |
| ZnS | | % | 0.15 | 0.15 |
| TSAN | | % | 0.2 | 0.2 |
| LLDPE | | % | 1.5 | 1.5 |
| CB | | % | 0.5 | 0.5 |
| HCR | | % | 3 | |
| SEBS MB in PPE | | % | | |
| BPADP | | % | 13 | 13 |
| GF | | % | 10 | 10 |
| TCP | | % | 2 | 2 |
| TiO₂ | | % | | |
| Total Si content | | | 0.82 | 0.82 |
| Property | Standard | Unit | | |
| Density | ISO1183 | g/cm³ | 1.185 | 1.191 |
| MVR | ISO 1133 | cc/10min | 30 | 26 |
| HDT | ISO75/f | °C | 136 | 141 |
| INI, RT | ISO180 | kJ/m² | 5.3 | 5.3 |
| IUI, RT | ISO180 | kJ/m² | 30 | 34 |
| INI, -30°C | ISO180 | kJ/m² | 4.2 | 4.6 |
| Flex. Mod. | ISO178 | MPa | 3790 | 3699 |
| Flex. Strength @ brk | ISO178 | MPa | 138 | 136 |
| UL rating 1.5mm, 70°C/168 hours | UL-94 | | V0 | V0 |
| UL rating 0.8mm, 23°C/48 hrs | UL-94 | | V0 | V0 |
| CTI PLC | ASTM D3638 | PLC | 3 | 2 |

As shown in Table 3A, the compositions of Example 3-5 which contain PPE-Si in combination with a higher concentration of flame retardant achieved a flame retardancy rating of V0 at 1.5 mm bar thickness and/or 1.0 mm bar thickness, with little change in impact strength compared to Examples 1 and 2. As expected, compositions shown in Comparative Examples 1-3 that contain only PPE show either a UL-94 rating of V1 or are not rated ("NR") even with higher flame retardant concentrations. Examples 1-3 based only on PPE-Si show better impact strength, lower HDT and Vicat temperatures, and lower flexural and tensile properties relative to comparative examples 1-3. Examples 8 in Table 3A demonstrate the ability to improve CTI performance relative to Example 3, using TCP as an additive, without sacrificing other properties. Examples 6-7 in Table 3A demonstrate the ability to improve CTI performance relative to Example 5 using TCP as an additive, without sacrificing flammability performance at 1.5mm.

Table 3A further shows that Comparative Examples 4-6, which contain either a hydrocarbon resin, SEBS, or a combination thereof, demonstrate that it is not feasible to achieve a V0 flame rating at 1.5 mm thickness even with high flame retardant loading together with an improvement in flow and impact properties for a 10% glass-filled composition.

In Table 3B, Comparative Example 7, which does not contain any HIPS and includes a significantly higher concentration of PPE, shows that a flame rating of V0 at 1.5 mm thickness still cannot be achieved. Comparative examples 8-10 show that with 6% PPE-Si in the composition, the flammability performance was improved to the desired level of V0 at 1.5 mm, without negatively affecting the heat, flow, and impact properties of the composition. However, the CTI performance was PLC3. Comparative example 11 suggests that a PPE-Si concentration of 4.2 weight percent was not enough to achieve the desired V0 flame rating, however it is noted that the composition achieved PLC3. Examples 9 & 10 in Table 3B demonstrate the ability to improve CTI performance using TCP as an additive, by sacrificing somewhat on impact performance relative to comparative examples 9 & 10 respectively.

Table 3C shows the effect of compositions which use a SEBS masterbatch (MB) in PPE to help to better disperse the impact modifier. The first example (CE10b) is a repeat of Comparative Example 10 of Table 3B but shows all the properties measured according to ISO test standards. Comparative Example 12 has a composition and properties that is identical to that of Example 10 except that it is made with a SEBS masterbatch. The remaining examples of Table 3C show how to maximize the impact strength and improve flow while maintaining the desired V0 flammability rating. Comparative Examples 13 and 14, which are based on higher SEBS MB and lower glass fiber concentration, show slightly improved impact and flow, and lower modulus, but do not meet the desired flammability rating of V0. Comparative Examples 15, 17 and 19 contain the HCR flow promoter together with higher flame retardant and SEBS MB concentration, and lower glass concentration and show a V0 flame rating with lower density, higher impact strength and flow, but achieve a CTI rating of only PLC3. Comparative Examples 16 and 18, containing less than 6 weight percent PPE-Si did not achieve a V0 flame rating.

Table 3D shows the compositions of comparative examples 20-25, which further alter the amounts of HCR, SEBS, and glass fibers to achieve a low density without affecting the flammability rating, impact and flow. In particular, comparative examples 24 and 25 each show the desired properties even with a low PPE-Si concentration (10 weight percent). However each of these compositions exhibited a CTI rating of PLC3.

Table 3E shows compositions which achieve a CTI PLC rating of 2 together with a V0 flammability rating. The examples 11-19 show a higher CTI PLC rating due to the addition of the tribasic calcium phosphate or titanium dioxide or their combination, though the density increased. Example 11 also achieved a V0 flammability rating at 1.0 mm.

This disclosure further encompasses the following aspects.

Aspect 1: A poly(phenylene ether) composition comprising 3 to 70 weight percent of a poly(phenylene ether)-poly(siloxane) block copolymer reaction product comprising a poly(phenylene ether)-poly(siloxane) block copolymer and a poly(phenylene ether); 0 to 70 weight percent of a second poly(phenylene ether); 5 to 20 weight percent of an organophosphate ester; 3 to 15 weight percent of a reinforcing filler comprising glass fibers; an impact modifier selected from 15 to 30 weight percent of a high impact polystyrene; 3 to 10 weight percent of a hydrogenated block copolymer of an alkenyl aromatic and a conjugated diene; or a combination thereof; and optionally, 1 to 5 weight percent of titanium dioxide; or 1 to 5 weight percent of hydroxyl apatite; or a combination thereof; provided that when the poly(phenylene ether)-poly(siloxane) block copolymer reaction product is present in an amount of 30 weight percent or more, the impact modifier is 15 to 30 weight percent of high impact polystyrene; and provided that when the impact modifier comprises the hydrogenated block copolymer, the poly(phenylene ether) composition comprises the titanium dioxide, the hydroxyl apatite, or the combination thereof; wherein weight percent of each component is based on the total weight of the poly(phenylene ether) composition.

Aspect 2: The poly(phenylene ether) composition of aspect 1, wherein the poly(phenylene ether) composition exhibits a UL-94 flammability rating of V0, measured using 1.5 millimeter test bars after conditioning at 23°C for 48 hours and at 70°C for 168 hours; and a comparative tracking index of greater than or equal to 250 volts.

Aspect 3: The poly(phenylene ether) composition of aspect 1 or 2, further comprising one or more of: 0 to 0.2 weight percent of an anti-drip agent; 0.5 to 2 weight percent of a black colorant; 0 to 2 weight percent of a mold release agent; 0 to 1 weight percent of a stabilizer; and 1 to 5 weight percent of a hydrocarbon resin.

Aspect 4: The poly(phenylene ether) composition of any one or more of aspects 1 to 3, wherein the second poly(phenylene ether) is present, and comprises a poly(2,6-dimethyl-1,4-phenylene ether) having an intrinsic viscosity if 0.3 to 0.6 deciliters per gram, preferably 0.35 to 0.50 deciliters per grams, measured at 25°C in chloroform using an Ubbelohde viscometer.

Aspect 5: The poly(phenylene ether) composition of any one or more of aspects 1 to 4, wherein the organophosphate ester comprises resorcinol bis(diphenyl phosphate), bisphenol A bis(diphenyl phosphate), or a combination thereof.

Aspect 6: The poly(phenylene ether) composition of any one or more of aspects 1 to 5, comprising 15 to 30 weight percent of the high impact polystyrene.

Aspect 7: The poly(phenylene ether) composition of any one or more of aspects 1 to 5, comprising 3 to 10 weight percent of the hydrogenated block copolymer of styrene and a conjugated diene; and 1 to 5 weight percent of titanium dioxide, 1 to 5 weight percent of hydroxyl apatite, or a combination thereof.

Aspect 8: The poly(phenylene ether) composition of aspect 1, comprising 3 to 28 weight percent of the poly(phenylene ether)-poly(siloxane) block copolymer reaction product comprising a poly(phenylene ether)-poly(siloxane) block copolymer and a poly(phenylene ether); 0 to 70 weight percent of the second poly(phenylene ether); 5 to 20 weight percent of the organophosphate ester; 3 to 15 weight percent of the reinforcing filler comprising glass fibers; and an impact modifier selected from 15 to 30 weight percent of the high impact polystyrene; or 3 to 10 weight percent of the hydrogenated block copolymer of an alkenyl aromatic and a conjugated diene.

Aspect 9: The poly(phenylene ether) composition of aspect 1, comprising 3 to 70 weight percent of the poly(phenylene ether)-poly(siloxane) block copolymer reaction product; 0 to 30 weight percent of the second poly(phenylene ether); 5 to 20 weight percent of the organophosphate ester; 5 to 15 weight percent of the reinforcing filler comprising glass fibers; 15 to 30 weight percent of the high impact polystyrene; 0 to 0.2 weight percent of an anti-drip agent; and optionally, 0.5 to 2 weight percent of a black colorant.

Aspect 10: The poly(phenylene ether) composition of aspect 1, comprising 5 to 25 weight percent of the poly(phenylene ether)-poly(siloxane) block copolymer reaction product; 38 to 68 weight percent of the second poly(phenylene ether); 10 to 15 weight percent of the organophosphate ester; 3 to 15 weight percent of the reinforcing filler comprising glass fibers; and 3 to 10 weight percent of the hydrogenated block copolymer of an alkenyl aromatic and a conjugated diene; 1 to 5 weight percent of a hydrocarbon resin; 0 to 0.3 weight percent of an anti-drip agent; 0 to 2 weight percent of a mold release agent; 0 to 1 weight percent of stabilizers; 1 to 5 weight percent of titanium dioxide, hydroxyl apatite; or a combination thereof; and optionally, 0.5 to 2 weight percent of a black colorant.

Aspect 11: The poly(phenylene ether) composition of aspect 1, comprising 5 to 20 weight percent of the poly(phenylene ether)-poly(siloxane) block copolymer reaction product; 40 to 65 weight percent of the second poly(phenylene ether); 10 to 15 weight percent of the organophosphate ester; 5 to 10 weight percent of the reinforcing filler comprising glass fibers; and 3 to 8 weight percent of the hydrogenated block copolymer of an alkenyl aromatic and a conjugated diene; 0 to 0.3 weight percent of an anti-drip agent; 0 to 2 weight percent of a mold release agent; 0 to 1 weight percent of stabilizers; 1 to 5 weight percent of titanium dioxide, hydroxyl apatite; or a combination thereof; and optionally, 0.5 to 2 weight percent of a black colorant.

Aspect 12: The poly(phenylene ether) composition of aspect 1, comprising 5 to 20 weight percent of the poly(phenylene ether)-poly(siloxane) block copolymer reaction product; 40 to 65 weight percent of the second poly(phenylene ether); 10 to 15 weight percent of the organophosphate ester; 3 to 15 weight percent of the reinforcing filler comprising glass fibers; and 3 to 8 weight percent of a hydrogenated block copolymer of an alkenyl aromatic and a conjugated diene; 1 to 5 weight percent of hydroxylapatite; 1 to 5 weight percent of titanium dioxide; 0 to 0.3 weight percent of an anti-drip agent; 0 to 2 weight percent of a mold release agent; 0 to 1 weight percent of stabilizers; and optionally, 0.5 to 2 weight percent of a black colorant.

Aspect 13: The poly(phenylene ether) composition of any one or more of aspects 1 to 12, wherein the poly(phenylene ether) composition exhibits: a UL-94 flammability rating of V0, measured using 1.5 millimeter test bars after conditioning at 23°C for 48 hours and at 70°C for 168 hours; and a comparative tracking index of greater than or equal to 250 volts; and optionally, one or more of: a UL-94 flammability rating of V0, measured using 1.0 millimeter test bars after conditioning at 23°C for 48 hours and at 70°C for 168 hours; a notched Izod impact strength of greater than or equal to 7 kJ/m², measured according to ISO 180; a melt volume rate of greater than or equal to 14 cubic centimeters per 10 minutes, measured at 280°C and a 10 kg load according to ISO 1133 or ASTM D1238; and a heat deflection temperature of greater than or equal to 120°C, measured according to ISO 75/f or ASTM D648.

Aspect 14: A method of making the poly(phenylene ether) composition of any one or more of aspects 1 to 13; the method comprising melt-mixing the components of the composition.

Aspect 15: An article comprising the poly(phenylene ether) composition of any one or more of aspects 1 to 13.

Aspect 16: The article of aspect 15, wherein the article is an electric vehicle battery module, battery housing, battery case, battery cell frame, battery cell spacers, battery cell retainers, bus bar holders, terminal covers, an electrical or electronic component, a thermoset circuit breaker, a fuser holder for an electrographic copier, a photovoltaic junction box, photovoltaic connector, an electrical connector, an automotive electrical connector, an electrical relay, a charge coupler, an appliance component, an automotive component, a portable device, a mobile component, or a stationary electrical component.

The compositions, methods, and articles can alternatively comprise, consist of, or consist essentially of, any appropriate materials, steps, or components herein disclosed. The compositions, methods, and articles can additionally, or alternatively, be formulated so as to be devoid, or substantially free, of any materials (or species), steps, or components, that are otherwise not necessary to the achievement of the function or objectives of the compositions, methods, and articles.

All ranges disclosed herein are inclusive of the endpoints, and the endpoints are independently combinable with each other. "Combinations" is inclusive of blends, mixtures, alloys, reaction products, and the like. The terms "first," "second," and the like, do not denote any order, quantity, or importance, but rather are used to distinguish one element from another. The terms "a" and "an" and "the" do not denote a limitation of quantity, and are to be construed to cover both the singular and the plural, unless otherwise indicated herein or clearly contradicted by context. "Or" means "and/or" unless clearly stated otherwise. Reference throughout the specification to "some aspects", "an aspect", and so forth, means that a particular element described in connection with the aspect is included in at least one aspect described herein, and may or may not be present in other aspects. The term "combination thereof" as used herein includes one or more of the listed elements, and is open, allowing the presence of one or more like elements not named. In addition, it is to be understood that the described elements may be combined in any suitable manner in the various aspects.

Unless specified to the contrary herein, all test standards are the most recent standard in effect as of the filing date of this application, or, if priority is claimed, the filing date of the earliest priority application in which the test standard appears.

Unless defined otherwise, technical and scientific terms used herein have the same meaning as is commonly understood by one of skill in the art to which this application belongs.

Compounds are described using standard nomenclature. For example, any position not substituted by any indicated group is understood to have its valency filled by a bond as indicated, or a hydrogen atom. A dash ("-") that is not between two letters or symbols is used to indicate a point of attachment for a substituent. For example, -CHO is attached through carbon of the carbonyl group.

As used herein, the term "hydrocarbyl", whether used by itself, or as a prefix, suffix, or fragment of another term, refers to a residue that contains only carbon and hydrogen. The residue can be aliphatic or aromatic, straight-chain, cyclic, bicyclic, branched, saturated, or unsaturated. It can also contain combinations of aliphatic, aromatic, straight chain, cyclic, bicyclic, branched, saturated, and unsaturated hydrocarbon moieties. However, when the hydrocarbyl residue is described as substituted, it may, optionally, contain heteroatoms over and above the carbon and hydrogen members of the substituent residue. Thus, when specifically described as substituted, the hydrocarbyl residue can also contain one or more carbonyl groups, amino groups, hydroxyl groups, or the like, or it can contain heteroatoms within the backbone of the hydrocarbyl residue. The term "alkyl" means a branched or straight chain, saturated aliphatic hydrocarbon group, e.g., methyl, ethyl, n-propyl, i-propyl, n-butyl, s-butyl, t-butyl, n-pentyl, s-pentyl, and n- and s-hexyl. "Alkenyl" means a straight or branched chain, monovalent hydrocarbon group having at least one carbon-carbon double bond (e.g., ethenyl (-HC=CH₂)). "Alkoxy" means an alkyl group that is linked via an oxygen (i.e., alkyl-O-), for example methoxy, ethoxy, and sec-butyloxy groups. "Alkylene" means a straight or branched chain, saturated, divalent aliphatic hydrocarbon group (e.g., methylene (-CH₂-) or, propylene (-(CH₂)₃-)). "Cycloalkylene" means a divalent cyclic alkylene group, -CₙH₂ₙ₋ₓ, wherein x is the number of hydrogens replaced by cyclization(s). "Cycloalkenyl" means a monovalent group having one or more rings and one or more carbon-carbon double bonds in the ring, wherein all ring members are carbon (e.g., cyclopentyl and cyclohexyl). "Aryl" means an aromatic hydrocarbon group containing the specified number of carbon atoms, such as phenyl, tropone, indanyl, or naphthyl. "Arylene" means a divalent aryl group. "Alkylarylene" means an arylene group substituted with an alkyl group. "Arylalkylene" means an alkylene group substituted with an aryl group (e.g., benzyl). The prefix "halo" means a group or compound including one more of a fluoro, chloro, bromo, or iodo substituent. A combination of different halo groups (e.g., bromo and fluoro), or only chloro groups can be present. The prefix "hetero" means that the compound or group includes at least one ring member that is a heteroatom (e.g., 1, 2, or 3 heteroatom(s)), wherein the heteroatom(s) is each independently N, O, S, Si, or P. "Substituted" means that the compound or group is substituted with at least one (e.g., 1, 2, 3, or 4) substituents that can each independently be a C₁₋₉ alkoxy, a C₁₋₉ haloalkoxy, a nitro (-NO₂), a cyano (-CN), a C₁₋₆ alkyl sulfonyl (-S(=O)₂-alkyl), a C₆₋₁₂ aryl sulfonyl (-S(=O)₂-aryl), a thiol (-SH), a thiocyano (-SCN), a tosyl (CH₃C₆H₄SO₂-), a C₃₋₁₂ cycloalkyl, a C₂₋₁₂ alkenyl, a C₅₋₁₂ cycloalkenyl, a C₆₋₁₂ aryl, a C₇₋₁₃ arylalkylene, a C₄₋₁₂ heterocycloalkyl, and a C₃₋₁₂ heteroaryl instead of hydrogen, provided that the substituted atom's normal valence is not exceeded. The number of carbon atoms indicated in a group is exclusive of any substituents. For example -CH₂CH₂CN is a C₂ alkyl group substituted with a nitrile.

## Claims

1. A poly(phenylene ether) composition comprising
3 to 70 weight percent of a poly(phenylene ether)-poly(siloxane) block copolymer reaction product comprising a poly(phenylene ether)-poly(siloxane) block copolymer and a poly(phenylene ether);
0 to 70 weight percent of a second poly(phenylene ether);
5 to 20 weight percent of an organophosphate ester;
3 to 15 weight percent of a reinforcing filler comprising glass fibers;
an impact modifier selected from
15 to 30 weight percent of a high impact polystyrene; or
3 to 10 weight percent of a hydrogenated block copolymer of an alkenyl aromatic and a conjugated diene; or
a combination thereof; and
optionally,
1 to 5 weight percent of titanium dioxide; or
1 to 5 weight percent of hydroxyl apatite; or
a combination thereof;
provided that when the poly(phenylene ether)-poly(siloxane) block copolymer reaction product is present in an amount of 30 weight percent or more, the impact modifier is 15 to 30 weight percent of high impact polystyrene; and
provided that when the impact modifier comprises the hydrogenated block copolymer, the poly(phenylene ether) composition comprises the titanium dioxide, the hydroxyl apatite, or the combination thereof;
wherein weight percent of each component is based on the total weight of the poly(phenylene ether) composition.

2. The poly(phenylene ether) composition of claim 1, wherein the poly(phenylene ether) composition exhibits
a UL-94 flammability rating of V0, measured using 1.5 millimeter test bars after conditioning at 23°C for 48 hours and at 70°C for 168 hours; and
a comparative tracking index of greater than or equal to 250 volts measured according to ASTM D3638 test method.

3. The poly(phenylene ether) composition of claim 1 or 2, further comprising one or more of:
0 to 0.2 weight percent of an anti-drip agent;
0.5 to 2 weight percent of a black colorant;
0 to 2 weight percent of a mold release agent;
0 to 1 weight percent of a stabilizer; and
1 to 5 weight percent of a hydrocarbon resin.

4. The poly(phenylene ether) composition of any one or more of claims 1 to 3, wherein the second poly(phenylene ether) is present, and comprises a poly(2,6-dimethyl-1,4-phenylene ether) having an intrinsic viscosity if 0.3 to 0.6 deciliters per gram, preferably 0.35 to 0.50 deciliters per grams, measured at 25°C in chloroform using an Ubbelohde viscometer.

5. The poly(phenylene ether) composition of any one or more of claims 1 to 4, wherein the organophosphate ester comprises resorcinol bis(diphenyl phosphate), bisphenol A bis(diphenyl phosphate), or a combination thereof.

6. The poly(phenylene ether) composition of any one or more of claims 1 to 5, comprising 15 to 30 weight percent of the high impact polystyrene.

7. The poly(phenylene ether) composition of any one or more of claims 1 to 6, comprising
3 to 10 weight percent of the hydrogenated block copolymer of styrene and a conjugated diene; and1 to 5 weight percent of titanium dioxide, 1 to 5 weight percent of hydroxyl apatite, or a combination thereof.

8. The poly(phenylene ether) composition of claim 1, comprising
3 to 28 weight percent of the poly(phenylene ether)-poly(siloxane) block copolymer reaction product comprising a poly(phenylene ether)-poly(siloxane) block copolymer and a poly(phenylene ether);
0 to 70 weight percent of the second poly(phenylene ether);
5 to 20 weight percent of the organophosphate ester;
3 to 15 weight percent of the reinforcing filler comprising glass fibers; and
the impact modifier selected from
15 to 30 weight percent of the high impact polystyrene; or
3 to 10 weight percent of the hydrogenated block copolymer of an alkenyl aromatic and a conjugated diene.

9. The poly(phenylene ether) composition of claim 1, comprising
3 to 70 weight percent of the poly(phenylene ether)-poly(siloxane) block copolymer reaction product;
0 to 30 weight percent of the second poly(phenylene ether);
5 to 20 weight percent of the organophosphate ester;
5 to 15 weight percent of the reinforcing filler comprising glass fibers;
15 to 30 weight percent of the high impact polystyrene;
0 to 0.2 weight percent of an anti-drip agent; and
optionally, 0.5 to 2 weight percent of a black colorant.

10. The poly(phenylene ether) composition of claim 1, comprising
5 to 25 weight percent of the poly(phenylene ether)-poly(siloxane) block copolymer reaction product;
38 to 68 weight percent of the second poly(phenylene ether);
10 to 15 weight percent of the organophosphate ester;
3 to 15 weight percent of the reinforcing filler comprising glass fibers; and
3 to 10 weight percent of the hydrogenated block copolymer of an alkenyl aromatic and a conjugated diene;
1 to 5 weight percent of a hydrocarbon resin;
0 to 0.3 weight percent of an anti-drip agent;
0 to 2 weight percent of a mold release agent;
0 to 1 weight percent of stabilizers;
1 to 5 weight percent of titanium dioxide, hydroxyl apatite; or a combination thereof; and
optionally, 0.5 to 2 weight percent of a black colorant.

11. The poly(phenylene ether) composition of claim 1, comprising
5 to 20 weight percent of the poly(phenylene ether)-poly(siloxane) block copolymer reaction product;
40 to 65 weight percent of the second poly(phenylene ether);
10 to 15 weight percent of the organophosphate ester;
5 to 10 weight percent of the reinforcing filler comprising glass fibers; and
3 to 8 weight percent of the hydrogenated block copolymer of an alkenyl aromatic and a conjugated diene;
0 to 0.3 weight percent of an anti-drip agent;
0 to 2 weight percent of a mold release agent;
0 to 1 weight percent of stabilizers;
1 to 5 weight percent of titanium dioxide, hydroxyl apatite; or a combination thereof; and
optionally, 0.5 to 2 weight percent of a black colorant.

12. The poly(phenylene ether) composition of claim 1, comprising
5 to 20 weight percent of the poly(phenylene ether)-poly(siloxane) block copolymer reaction product;
40 to 65 weight percent of the second poly(phenylene ether);
10 to 15 weight percent of the organophosphate ester;
3 to 15 weight percent of the reinforcing filler comprising glass fibers; and
3 to 8 weight percent of a hydrogenated block copolymer of an alkenyl aromatic and a conjugated diene;
1 to 5 weight percent of hydroxylapatite;
1 to 5 weight percent of titanium dioxide;
0 to 0.3 weight percent of an anti-drip agent;
0 to 2 weight percent of a mold release agent;
0 to 1 weight percent of stabilizers; and
optionally, 0.5 to 2 weight percent of a black colorant.

13. The poly(phenylene ether) composition of any one or more of claims 1 to 12, wherein the poly(phenylene ether) composition exhibits:
a UL-94 flammability rating of V0, measured using 1.5 millimeter test bars after conditioning at 23°C for 48 hours and at 70°C for 168 hours; and
a comparative tracking index of greater than or equal to 250 volts measured according to ASTM D3638 test method; and
optionally, one or more of:
a UL-94 flammability rating of V0, measured using 1.0 millimeter test bars after conditioning at 23°C for 48 hours and at 70°C for 168 hours;
a notched Izod impact strength of greater than or equal to 7 kJ/m², measured according to ISO 180;
a melt volume rate of greater than or equal to 14 cubic centimeters per 10 minutes, measured at 280°C and a 10 kg load according to ISO 1133 or ASTM D1238; and
a heat deflection temperature of greater than or equal to 120°C, measured according to ISO 75/f or ASTM D648.

14. A method of making the poly(phenylene ether) composition of any one or more of claims 1 to 13; the method comprising melt-mixing the components of the composition.

15. An article comprising the poly(phenylene ether) composition of any one or more of claims 1 to 13, preferably wherein the article is an electric vehicle battery module, battery housing, battery case, battery cell frame, battery cell spacers, battery cell retainers, bus bar holders, terminal covers, an electrical or electronic component, a thermoset circuit breaker, a fuser holder for an electrographic copier, a photovoltaic junction box, photovoltaic connector, an electrical connector, an automotive electrical connector, an electrical relay, a charge coupler, an appliance component, an automotive component, a portable device, a mobile component, or a stationary electrical component.

## Patentansprüche

1. Eine Poly(phenylenether)-Zusammensetzung, umfassend
3 bis 70 Gewichtsprozent eines Poly(phenylenether)-Poly(siloxan)-Blockcopolymer-Reaktionsprodukts, das ein Poly(phenylenether)-Poly(siloxan)-Blockcopolymer und einen Poly(phenylenether) umfasst;
0 bis 70 Gewichtsprozent eines zweiten Poly(phenylenethers);
5 bis 20 Gewichtsprozent eines Organophosphatesters;
3 bis 15 Gewichtsprozent eines verstärkenden Füllstoffs, der Glasfasern umfasst; einen Schlagzähigkeitsmodifikator, ausgewählt aus
15 bis 30 Gewichtsprozent eines hochschlagfesten Polystyrols; oder
3 bis 10 Gewichtsprozent eines hydrierten Blockcopolymers aus einem Alkenylaromaten und einem konjugierten Dien; oder
eine Kombination davon;
und gegebenenfalls
1 bis 5 Gew.-% Titandioxid; oder
1 bis 5 Gew.-% Hydroxylapatit; oder
eine Kombination davon;
mit der Maßgabe, dass, wenn das Poly(phenylenether)-Poly(siloxan)-Blockcopolymer-Reaktionsprodukt in einer Menge von 30 Gew.-% oder mehr vorhanden ist, der Schlagzähigkeitsmodifikator 15 bis 30 Gew.-% hochschlagzähes Polystyrol ist; und mit der Maßgabe, dass, wenn der Schlagzähigkeitsmodifikator das hydrierte Blockcopolymer umfasst, die Poly(phenylenether)-Zusammensetzung das Titandioxid, das Hydroxylapatit oder die Kombination davon umfasst;
wobei die Gewichtsprozente jeder Komponente auf das Gesamtgewicht der Poly(phenylenether)-Zusammensetzung bezogen sind.

2. Die Poly(phenylenether)-Zusammensetzung nach Anspruch 1, wobei die Poly(phenylenether)-Zusammensetzung
eine UL-94-Entflammbarkeitseinstufung von V0, gemessen unter Verwendung von 1,5-Millimeter-Teststäben nach einer Konditionierung bei 23°C für 48 Stunden und bei 700°C für 168 Stunden, und
einen vergleichenden Verfolgungsindex von größer oder gleich 250 Volt, gemessen nach dem ASTM D3638-Testverfahren, aufweist.

3. Die Poly(phenylenether)-Zusammensetzung nach Anspruch 1 oder 2, die außerdem eines oder mehrere der folgenden Elemente enthält:
0 bis 0,2 Gewichtsprozent eines Anti-Tropf-Mittels;
0,5 bis 2 Gewichtsprozent eines schwarzen Farbstoffs;
0 bis 2 Gewichtsprozent eines Formtrennmittels;
0 bis 1 Gewichtsprozent eines Stabilisators; und
1 bis 5 Gewichtsprozent eines Kohlenwasserstoffharzes.

4. Die Poly(phenylenether)-Zusammensetzung nach einem oder mehreren der Ansprüche 1 bis 3, wobei der zweite Poly(phenylenether) vorhanden ist und einen Poly(2,6-dimethyl-1 4phenylenether) mit einer Grenzviskosität von 0,3 bis 0,6 Deziliter pro Gramm, vorzugsweise 0,35 bis 0,50 Deziliter pro Gramm, gemessen bei 25°C in Chloroform unter Verwendung eines Ubbelohde-Viskosimeters umfasst.

5. Die Poly(phenylenether)-Zusammensetzung nach einem oder mehreren der Ansprüche 1 bis 4, wobei der Organophosphatester Resorcinbis(diphenylphosphat), Bisphenol-A-bis(diphenylphosphat) oder eine Kombination davon umfasst.

6. Die Poly(phenylenether)-Zusammensetzung nach einem oder mehreren der Ansprüche 1 bis 5, die 15 bis 30 Gew.-% des hochschlagfesten Polystyrols enthält.

7. Die Poly(phenylenether)-Zusammensetzung nach einem oder mehreren der Ansprüche 1 bis 6, umfassend
3 bis 10 Gewichtsprozent des hydrierten Blockcopolymers aus Styrol und einem konjugierten Dien; und 1 bis 5 Gewichtsprozent Titandioxid, 1 bis 5 Gewichtsprozent Hydroxylapatit oder eine Kombination davon.

8. Die Poly(phenylenether)-Zusammensetzung nach Anspruch 1, umfassend
3 bis 28 Gew.-% des Poly(phenylenether)-poly(siloxan)-Blockcopolymer-Reaktionsprodukts, das ein Poly(phenylenether)-poly(siloxan)-Blockcopolymer und ein Poly(phenylenether) umfasst;
0 bis 70 Gewichtsprozent des zweiten Poly(phenylenethers);
5 bis 20 Gewichtsprozent des Organophosphatesters;
3 bis 15 Gewichtsprozent des verstärkenden Füllstoffs, der Glasfasern umfasst; und den Schlagzähigkeitsmodifikator, ausgewählt aus
15 bis 30 Gewichtsprozent des hochschlagfesten Polystyrols; oder
3 bis 10 Gewichtsprozent des hydrierten Blockcopolymers aus einem Alkenylaromaten und einem konjugierten Dien.

9. Die Poly(phenylenether)-Zusammensetzung nach Anspruch 1, umfassend
3 bis 70 Gewichtsprozent des Poly(phenylenether)-Poly(siloxan)-Blockcopolymer-Reaktionsprodukts;
0 bis 30 Gewichtsprozent des zweiten Poly(phenylenethers);
5 bis 20 Gewichtsprozent des Organophosphatesters;
5 bis 15 Gewichtsprozent des verstärkenden Füllstoffs, der Glasfasern umfasst;
15 bis 30 Gewichtsprozent des hochschlagfesten Polystyrols;
0 bis 0,2 Gewichtsprozent eines Antitropfmittels; und
wahlweise 0,5 bis 2 Gewichtsprozent eines schwarzen Farbstoffs.

10. Die Poly(phenylenether)-Zusammensetzung nach Anspruch 1, umfassend
5 bis 25 Gewichtsprozent des Poly(phenylenether)-Poly(siloxan)-Blockcopolymer-Reaktionsprodukts;
38 bis 68 Gewichtsprozent des zweiten Poly(phenylenethers);
10 bis 15 Gewichtsprozent des Organophosphatesters;
3 bis 15 Gewichtsprozent des verstärkenden Füllstoffs, der Glasfasern umfasst; und
3 bis 10 Gewichtsprozent des hydrierten Blockcopolymers aus einem Alkenylaromaten und einem konjugierten Dien;
1 bis 5 Gewichtsprozent eines Kohlenwasserstoffharzes;
0 bis 0,3 Gewichtsprozent eines Antitropfmittels;
0 bis 2 Gewichtsprozent eines Formtrennmittels;
0 bis 1 Gewichtsprozent Stabilisatoren;
1 bis 5 Gewichtsprozent Titandioxid, Hydroxylapatit oder eine Kombination davon; und
wahlweise 0,5 bis 2 Gewichtsprozent eines schwarzen Farbstoffs.

11. Poly(phenylenether)-Zusammensetzung nach Anspruch 1, umfassend
5 bis 20 Gewichtsprozent des Poly(phenylenether)-Poly(siloxan)-Blockcopolymer-Reaktionsprodukts;
40 bis 65 Gewichtsprozent des zweiten Poly(phenylenethers);
10 bis 15 Gewichtsprozent des Organophosphatesters;
5 bis 10 Gewichtsprozent des verstärkenden Füllstoffs, der Glasfasern umfasst; und
3 bis 8 Gewichtsprozent des hydrierten Blockcopolymers aus einem Alkylenaromaten und einem konjugierten Dien;
0 bis 0,3 Gewichtsprozent eines Antitropfmittels;
0 bis 2 Gewichtsprozent eines Formtrennmittels;
0 bis 1 Gewichtsprozent Stabilisatoren;
1 bis 5 Gewichtsprozent Titandioxid, Hydroxylapatit; oder eine Kombination hiervon; und
wahlweise 0,5 bis 2 Gewichtsprozent eines schwarzen Farbstoffs.

12. Die Poly(phenylenether)-Zusammensetzung nach Anspruch 1, umfassend
5 bis 20 Gewichtsprozent des Poly(phenylenether)-Poly(siloxan)-Blockcopolymer-Reaktionsprodukts;
40 bis 65 Gewichtsprozent des zweiten Poly(phenylenethers);
10 bis 15 Gewichtsprozent des Organophosphatesters;
3 bis 15 Gewichtsprozent des verstärkenden Füllstoffs, der Glasfasern umfasst; und
3 bis 8 Gewichtsprozent eines hydrierten Blockcopolymers aus einem Alkenylaromaten und einem konjugierten Dien;
1 bis 5 Gewichtsprozent Hydroxylapatit;
1 bis 5 Gewichtsprozent Titandioxid;
0 bis 0,3 Gewichtsprozent eines Antitropfmittels;
0 bis 2 Gewichtsprozent eines Formtrennmittels;
0 bis 1 Gewichtsprozent Stabilisatoren; und
wahlweise 0,5 bis 2 Gewichtsprozent eines schwarzen Farbstoffs.

13. Die Poly(phenylenether)-Zusammensetzung nach einem oder mehreren der Ansprüche 1 bis 12, wobei die Poly(phenylenether)-Zusammensetzung
eine UL-94-Entflammbarkeitseinstufung von V0, gemessen unter Verwendung von 1,5-Millimeter-Teststäben nach Konditionierung bei 23°C für 48 Stunden und bei 700°C für 168 Stunden; und
einen vergleichenden Verfolgungsindex von größer als oder gleich 250 Volt, gemessen gemäß dem ASTM D3638-Testverfahren; und
optional eines oder mehrere davon:
eine UL-94-Entflammbarkeitseinstufung von V0, gemessen unter Verwendung von 1,0-Millimeter-Teststäben nach Konditionierung bei 23°C für 48 Stunden und bei 700°C für 168 Stunden;
eine Kerbschlagzähigkeit nach Izod von größer oder gleich 7 kJ/m2 gemessen gemäß ISO 180,
eine Schmelzvolumenrate von mindestens 14 Kubikzentimetern pro 10 Minuten, gemessen bei 280°C und einer Last von 10 kg gemäß ISO 1133 oder ASTM D 1238; und
eine Wärmeformbeständigkeitstemperatur von mindestens 120°C, gemessen gemäß ISO 75/f oder ASTM D648
aufweist.

14. Ein Verfahren zur Herstellung der Poly(phenylenether)-Zusammensetzung nach einem oder mehreren der Ansprüche 1 bis 13, wobei das Verfahren das Schmelzmischen der Komponenten der Zusammensetzung umfasst.

15. Gegenstand, umfassend die Poly(phenylenether)-Zusammensetzung nach einem oder mehreren der Ansprüche 1 bis 13, wobei es sich bei dem Gegenstand vorzugsweise um ein Elektrofahrzeug-Batteriemodul, ein Batteriegehäuse, ein Batteriefach, einen Batteriezellenrahmen, Batteriezellenabstandshalter, Batteriezellenhalter, Stromschienenhalter, Polabdeckungen, ein elektrisches oder elektronisches Bauteil, einen duroplastischen Stromkreisunterbrecher, einen Fixierhalter für einen elektrografischen Kopierer, einen photovoltaischen Anschlusskasten, einen photovoltaischen Steckverbinder, einen elektrischen Steckverbinder, einen elektrischen Steckverbinder für ein Kraftfahrzeug, ein elektrisches Relais, einen Ladekoppler, eine Gerätekomponente, eine Kraftfahrzeugkomponente, ein tragbares Gerät, eine mobile Komponente oder eine stationäre elektrische Komponente handelt.

## Revendications

1. Composition de poly(phénylène-éther) comprenant
3 à 70 % en poids d'un produit réactionnel de copolymère séquencé de poly(phénylène-éther)-poly(siloxane) comprenant un copolymère séquencé de poly(phénylène-éther)-poly(siloxane) et un poly(phénylène-éther) ;
0 à 70 % en poids d'un deuxième poly(phénylène-éther) ;
5 à 20 % en poids d'un ester phosphate organique ;
3 à 15 % en poids d'une charge de renforcement comprenant des fibres de verre ; un modifiant choc choisi parmi
15 à 30 % en poids d'un polystyrène choc ; ou
3 à 10 % en poids d'un copolymère séquencé hydrogéné d'un alcényle aromatique et d'un diène conjugué ; ou
une de leurs combinaisons ; et
éventuellement
1 à 5 % en poids de dioxyde de titane ; ou
1 à 5 % en poids d'hydroxyapatite ; ou
une de leurs combinaisons ;
sous réserve que, lorsque le produit réactionnel de copolymère séquencé de poly(phénylène-éther)-poly(siloxane) est présent en une quantité de 30 % en poids ou plus, le modifiant choc soit du polystyrène choc à raison de 15 à 30 % en poids ; et
sous réserve que, lorsque le modifiant choc comprend le copolymère séquencé hydrogéné, la composition de poly(phénylène-éther) comprenne le dioxyde de titane, l'hydroxyapatite, ou leur combinaison ;
dans laquelle le pourcentage en poids de chaque composant est basé sur le poids total de la composition de poly(phénylène-éther).

2. Composition de poly(phénylène-éther) selon la revendication 1, laquelle composition de poly(phénylène-éther) présente
une note d'inflammabilité UL94 de V0, mesurée par utilisation de barreaux de test de 1,5 millimètres après conditionnement à 23 °C pendant 48 heures et à 70 °C pendant 168 heures ; et
un indice de suivi comparatif supérieur ou égal à 250 volts, mesuré conformément à la méthode de test ASTM D3638.

3. Composition de poly(phénylène-éther) selon la revendication 1 ou 2, comprenant en outre un ou plusieurs parmi :
0 à 0,2 % en poids d'un agent anti-goutte ;
0,5 à 2 % en poids d'un colorant noir ;
0 à 2 % en poids d'un agent de démoulage ;
0 à 1 % en poids d'un stabilisant ; et
1 à 5 % en poids d'une résine hydrocarbonée.

4. Composition de poly(phénylène-éther) selon l'une quelconque ou plusieurs des revendications 1 à 3, dans laquelle le deuxième poly(phénylène-éther) est présent, et comprend un poly(2,6-diméthyl-1,4-phénylène-éther) ayant une viscosité intrinsèque de 0,3 à 0,6 décilitre par gramme, de préférence de 0,35 à 0,50 décilitre par gramme, mesurée à 25 °C dans du chloroforme au moyen d'un viscosimètre Ubbelohde.

5. Composition de poly(phénylène-éther) selon l'une quelconque ou plusieurs des revendications 1 à 4, dans laquelle l'ester phosphate organique comprend du bis(diphénylphosphate) de résorcinol, du bis(diphénylphosphate) de bisphénol A, ou une combinaison de ceux-ci.

6. Composition de poly(phénylène-éther) selon l'une quelconque ou plusieurs des revendications 1 à 5, comprenant 15 à 30 % en poids du polystyrène choc.

7. Composition de poly(phénylène-éther) selon l'une quelconque ou plusieurs des revendications 1 à 6, comprenant
3 à 10 % en poids du copolymère séquencé hydrogéné de styrène et d'un diène conjugué ; et 1 à 5 % en poids de dioxyde de titane, 1 à 5 % en poids d'hydroxyapatite, ou une combinaison de ceux-ci.

8. Composition de poly(phénylène-éther) selon la revendication 1, comprenant
3 à 28 % en poids du produit réactionnel de copolymère séquencé de poly(phénylène-éther)-poly(siloxane) comprenant un copolymère séquencé de poly(phénylène-éther)-poly(siloxane) et un poly(phénylène-éther) ;
0 à 70 % en poids du deuxième poly(phénylène-éther) ;
5 à 20 % en poids de l'ester phosphate organique ;
3 à 15 % en poids de la charge de renforcement comprenant des fibres de verre ; et le modifiant choc choisi parmi
15 à 30 % en poids du polystyrène choc ; ou
3 à 10 % en poids du copolymère séquencé hydrogéné d'un alcényle aromatique et d'un diène conjugué.

9. Composition de poly(phénylène-éther) selon la revendication 1, comprenant
3 à 70 % en poids du produit réactionnel de copolymère séquencé de poly(phénylène-éther)-poly(siloxane) ;
0 à 30 % en poids du deuxième poly(phénylène-éther) ;
5 à 20 % en poids de l'ester phosphate organique ;
5 à 15 % en poids de la charge de renforcement comprenant des fibres de verre ;
15 à 30 % en poids du polystyrène choc ;
0 à 0,2 % en poids d'un agent anti-goutte ; et
éventuellement 0,5 à 2 % en poids d'un colorant noir.

10. Composition de poly(phénylène-éther) selon la revendication 1, comprenant
5 à 25 % en poids du produit réactionnel de copolymère séquencé de poly(phénylène-éther)-poly(siloxane) ;
38 à 68 % en poids du deuxième poly(phénylène-éther) ;
10 à 15 % en poids de l'ester phosphate organique ;
3 à 15 % en poids de la charge de renforcement comprenant des fibres de verre ; et
3 à 10 % en poids du copolymère séquencé hydrogéné d'un alcényle aromatique et d'un diène conjugué ;
1 à 5 % en poids d'une résine hydrocarbonée ;
0 à 0,3 % en poids d'un agent anti-goutte ;
0 à 2 % en poids d'un agent de démoulage ;
0 à 1 % en poids de stabilisants ;
1 à 5 % en poids de dioxyde de titane, d'hydroxyapatite ; ou d'une combinaison de ceux-ci ; et
éventuellement 0,5 à 2 % en poids d'un colorant noir.

11. Composition de poly(phénylène-éther) selon la revendication 1, comprenant
5 à 20 % en poids du produit réactionnel de copolymère séquencé de poly(phénylène-éther)-poly(siloxane) ;
40 à 65 % en poids du deuxième poly(phénylène-éther) ;
10 à 15 % en poids de l'ester phosphate organique ;
5 à 10 % en poids de la charge de renforcement comprenant des fibres de verre ; et
3 à 8 % en poids du copolymère séquencé hydrogéné d'un alcényle aromatique et d'un diène conjugué ;
0 à 0,3 % en poids d'un agent anti-goutte ;
0 à 2 % en poids d'un agent de démoulage ;
0 à 1 % en poids de stabilisants ;
1 à 5 % en poids de dioxyde de titane, d'hydroxyapatite ; ou d'une combinaison de ceux-ci ; et
éventuellement 0,5 à 2 % en poids d'un colorant noir.

12. Composition de poly(phénylène-éther) selon la revendication 1, comprenant
5 à 20 % en poids du produit réactionnel de copolymère séquencé de poly(phénylène-éther)-poly(siloxane) ;
40 à 65 % en poids du deuxième poly(phénylène-éther) ;
10 à 15 % en poids de l'ester phosphate organique ;
3 à 15 % en poids de la charge de renforcement comprenant des fibres de verre ; et
3 à 8 % en poids du copolymère séquencé hydrogéné d'un alcényle aromatique et d'un diène conjugué ;
1 à 5 % en poids d'hydroxyapatite ;
1 à 5 % en poids de dioxyde de titane ;
0 à 0,3 % en poids d'un agent anti-goutte ;
0 à 2 % en poids d'un agent de démoulage ;
0 à 1 % en poids de stabilisants ; et
éventuellement 0,5 à 2 % en poids d'un colorant noir.

13. Composition de poly(phénylène-éther) selon l'une quelconque ou plusieurs des revendications 1 à 12, laquelle composition de poly(phénylène-éther) présente :
une note d'inflammabilité UL94 de V0, mesurée par utilisation de barreaux de test de 1,5 millimètres après conditionnement à 23 °C pendant 48 heures et à 70 °C pendant 168 heures ; et
un indice de suivi comparatif supérieur ou égal à 250 volts, mesuré conformément à la méthode de test ASTM D3638 ; et
éventuellement un ou plusieurs parmi :
une note d'inflammabilité UL94 de V0, mesurée par utilisation de barreaux de test de 1,0 millimètre après conditionnement à 23 °C pendant 48 heures et à 70 °C pendant 168 heures ;
une résistance au choc Izod sur barreau entaillé inférieure ou égale à 7 kJ/m², mesurée conformément à la norme ISO 180 ;
un débit volumique à l'état fondu supérieur ou égal à 14 centimètres cubes par 10 minutes, mesuré à 280 °C et sous une charge de 10 kg conformément à la norme ISO 1133 ou ASTM D1238 ; et
une température de fléchissement thermique supérieure ou égale à 120 °C, mesurée conformément à la norme ISO 75/f ou ASTM D648.

14. Méthode de production de la composition de poly(phénylène-éther) de l'une quelconque ou plusieurs des revendications 1 à 13 ; la méthode comprenant le mélange à l'état fondu des composants de la composition.

15. Article comprenant la composition de poly(phénylène-éther) de l'une quelconque ou plusieurs des revendications 1 à 13, de préférence lequel article est un module de batterie pour véhicule électrique, un logement de batterie, un boîtier de batterie, un bâti de cellules galvaniques, des espaceurs de cellules galvaniques, des dispositifs de retenue de cellules galvaniques, des supports de barres omnibus, des couvre-bornes, un composant électrique ou électronique, un disjoncteur thermique, un support d'unité de fusion pour un copieur électrographique, une boîte de raccordement photovoltaïque, un connecteur photovoltaïque, un connecteur électrique, un connecteur électrique d'automobile, un relais électrique, un coupleur de charge, un composant d'appareil, un composant d'automobile, un dispositif portable, un composant mobile, ou un composant électrique fixe.
